(19) Europäisches Patentamt
European Patent Office
Office européen des brevets

(11) **EP 4 614 400 A1**

(12) **EUROPEAN PATENT APPLICATION**

(43) Date of publication:
**10.09.2025 Bulletin 2025/37**

(21) Application number: **24305338.6**

(22) Date of filing: **05.03.2024**

(51) International Patent Classification (IPC):
**G06N 10/20** $^{(2022.01)}$     **G06N 10/40** $^{(2022.01)}$
**G06N 10/70** $^{(2022.01)}$

(52) Cooperative Patent Classification (CPC):
**G06N 10/20; G06N 10/40; G06N 10/70**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Alice & Bob**
**75015 Paris (FR)**

(72) Inventors:
• **ROUSSEAU, Rémi**
  **75015 Paris (FR)**
• **MURANI, Anil**
  **75015 Paris (FR)**
• **ALBERTINALE, Emanuele**
  **75015 Paris (FR)**

(74) Representative: **Cabinet Netter**
**36, avenue Hoche**
**75008 Paris (FR)**

(54) **A METHOD OF CALIBRATING A QUANTUM SYSTEM IN VIEW OF STABILIZING A BOSONIC QUBIT**

(57) The invention relates to a method of calibrating a quantum system of stabilizing a so-called moon cat qubit. The method comprises:
- turning on (2200) the two-photon pump at a frequency | $2f_a - f_b$| along with the longitudinal pump at a frequency $f_b$,
- compensating (2210) an undesired drive of the buffer mode,
- turning on (2220) the buffer drive at a frequency $f_b$,
- for one or more amplitude values of the longitudinal pump, varying (2230) the phase difference between the longitudinal pump and the buffer drive while measuring $\langle a^\dagger a \rangle$ in order to derive a linear relationship between the amplitude of the longitudinal pump and the amplitude of $\lambda$, and
- setting (2260) the amplitude of the longitudinal pump at a value at which the amplitude of $\lambda$ is equal to a desired value, and setting (2270) said phase difference at a value at which $\langle a^\dagger a \rangle$ is minimal.

FIG. 22

EP 4 614 400 A1

**Description**

The field of the invention relates to stabilizing a bosonic qubit.

Generally speaking, superconducting qubits can be implemented as two-level systems of superconducting electronic circuits. Such qubits can be stored in bosonic modes and thus form a particular class of superconducting qubits known as bosonic qubits.

It is known from the state of the art that it is possible to stabilize cat qubits, i.e. bosonic qubits defined by a quantum manifold spanned by the superpositions of two coherent states, which are quasi-classical states of the bosonic mode. To this end, a specific dissipative stabilization mechanism may be performed and consists in engineering a non-linear conversion between two photons of a first mode - also known as memory mode or cat qubit mode - that hosts the stabilized quantum manifold and one photon of a second mode - also known as buffer mode - that is strongly dissipative.

The cat qubits offer the advantage of having a bit-flip rate that decreases exponentially while the phase-flip rate increases only linearly. As a result, stabilized cat qubits benefit from a high noise bias, which means that the bit-flip probability is much smaller than the phase-flip probability.

Due to their noise structure, cat qubits can be concatenated with a repetition code instead of the usual surface code used for usual superconducting qubits. However, it appears that the noise bias of the cat qubits may not be sufficient to use a simple repetition code for some large-scale algorithms and there is therefore a need to find bosonic qubits with an even higher noise bias.

For this purpose, recent studies have focused on a particular class of cat qubits: the squeezed cat qubits. For instance, Q. Xu et al. (2022) have proposed, in the article "Autonomous quantum error correction and fault-tolerant quantum computation with squeezed cat qubits" (arXiv:2210.13406) to implement an autonomous quantum error correction (AQEC) scheme using squeezed cat code against the dominant error source, excitation loss, in continuous-variable systems. This article announces a noise bias of about $10^{-15}$ with only a mean number of four photons to encode the cat-states. As a further example, T. Hillmann et al. (2022) propose and analyze, in the article "Quantum error correction with dissipatively stabilized squeezed cat qubits" (arXiv:2210.13359, Phys. Rev. A 107, 032423), the error correction performance of a dissipatively stabilized squeezed cat qubit.

However, the possibility of stabilizing a squeezed cat qubit faces several obstacles in practice and thus remains purely theoretical as of today. In particular, such a stabilization would require to engineer a multitude of Hamiltonian terms to yield the desired dissipator and thus to use too many pumps to the point of threatening the stability of the system. It can be added that one of these terms, $a^{\dagger 2}b^{\dagger}$, where $a$ is the photon annihilation operator of the first mode and b is the photon annihilation operator of the second mode, requires the injection of a high amount of energy in the system that jeopardizes the coherence of the system.

In this context, the Applicant has recently succeeded in stabilizing a particular type of bosonic qubit whose performances are equivalent or even slightly superior to those of the squeezed cat qubit. Such stabilization relies, in addition to the non-linear conversion between two photons of the first mode and one photon of the second mode and the drive of the second mode, on a longitudinal coupling between the first mode and the second mode. The bosonic qubit stabilized in this way is called *"moon cat qubit"* by the Applicant because of its Wigner tomography which shows two blobs in the shape of a crescent moon.

Such a moon cat qubit makes it possible to achieve a bit-flip probability up to six times lower than that of a standard cat qubit, i.e. a cat qubit stabilized by means of the dissipative stabilization mechanism mentioned above. This result is obtained without having to produce the term $a^{\dagger 2}b^{\dagger}$ of the Hamiltonian of the squeezed cat qubit and therefore without using the corresponding pump which, according to the theory, must deliver microwaves at a frequency $2f_a + f_b$, which is of the order of 15 gigahertz (GHz), where $f_a$ is the resonant frequency of the first mode and $f_b$ is the resonant frequency of the second mode.

The calibration of a quantum system capable of stabilizing a moon cat qubit presents several difficulties, notably due to the presence of longitudinal coupling between the first mode and the second mode. In particular, the longitudinal coupling induces a parasitic drive of the second mode as well as stark-shift, i.e. a deviation of the respective resonant frequencies of the first mode and the second mode. Furthermore, the relative phase of the longitudinal coupling and the drive of the second mode must be precisely tuned, and the number of photons in the memory can be controlled by adjusting the amplitude of the longitudinal coupling.

The present invention seeks to improve the situation.

To this end, the Applicant proposes a method of calibrating a quantum system.

Such a quantum system is arranged for stabilizing a bosonic qubit and comprises:

- a command circuit including a first microwave source, a second microwave source and a third microwave source each arranged for delivering microwave radiation, and
- a non-linear superconducting quantum circuit including an asymmetrically threaded superconducting quantum interference device and at least one resonant portion to which said asymmetrically threaded superconducting quantum interference device is connected, said asymmetrically threaded superconducting quantum interference device having flux lines through which radiation can be delivered to modulate a common flux and a differential flux, said non-linear superconducting quantum circuit having a first mode with a first resonant frequency and a second mode with a second resonant frequency, said second resonant frequency being different from twice the first resonant frequency, said second mode being dissipative.

The asymmetrically threaded superconducting quantum interference device is arranged such that, when

- the first microwave source delivers radiation through said flux lines to modulate the common flux at a frequency equal to the absolute value of the difference between twice the first resonant frequency and the second resonant frequency,
- the second microwave source delivers radiation through said flux lines to modulate the common flux at a frequency equal to the second resonant frequency, and
- the third microwave source delivers radiation at a frequency equal to the second resonant frequency to the a least one resonant portion to drive the second mode,

the non-linear superconducting quantum circuit engineers a Hamiltonian H expressed as

$$H/\hbar = g_2(a^2 + \lambda a^\dagger a - \alpha^2)b^\dagger + \text{h.c.}$$

, where $g_2$ is proportional to the amplitude of the first microwave source, $a$ is the annihilation operator of the first mode, $\lambda$ is a complex number which phase and amplitude result from the amplitude of the second microwave source and are each defined relative to the phase and amplitude of the first microwave source respectively, $\alpha$ is a complex number resulting from the third microwave source and defined relative to the first microwave source, b is the annihilation operator of the second mode, and h. c. is the Hermitian conjugate, said Hamiltonian H yielding through dissipation of the second mode an effective dissipator $D[a^2 + \lambda a^\dagger a - \alpha^2]$ which stabilizes a two-dimensional manifold hosting the bosonic qubit in the first mode.

The method comprises the following operations:

a) turning on the first microwave source at a frequency equal to the absolute value of the difference between twice the first resonant frequency and the second resonant frequency along with the second microwave source at a frequency equal to the second resonant frequency,

b) compensating an undesired drive of the second mode caused by the second microwave source,

c) turning on the third microwave source at a frequency equal to the second resonant frequency,

d) for one or more amplitude values of the second microwave source, varying the phase difference between the second microwave source and the third microwave source while measuring a quantity $\langle a^\dagger a \rangle$,

e) determining the respective value of the amplitude of the complex number $\lambda$ corresponding to each amplitude value of the second microwave source on the basis of the evolution of the quantity $\langle a^\dagger a \rangle$ as a function of said phase difference for said amplitude value of the second microwave source, and deriving a linear relationship between the amplitude of the second microwave source and the amplitude of the complex number $\lambda$, and

f) setting the amplitude of the second microwave source at a value at which the amplitude of the complex number $\lambda$ is substantially equal to a desired value based on said linear relationship, and setting said phase difference at a value at which the quantity $\langle a^\dagger a \rangle$ is minimal.

According to one or more embodiments, the flux lines of the asymmetrically threaded superconducting quantum interference device include at least left and right flux lines, the quantum system further comprising a compensation module arranged to couple the second microwave source to said left and right flux lines, said compensation module including an RF power divider arranged to divide the output of the second microwave source into a first and a second power lines respectively connected to the left and right flux lines, an RF variable attenuator arranged on the first power line to vary the amplitude difference between the common flux and the differential flux, and an RF phase shifter arranged on the second power line to vary the phase difference between the common flux and the differential flux, operation b) includes:

b1) varying the amplitude difference between the common flux and the differential flux with the RF variable attenuator and the phase difference between the common flux and the differential flux with the RF phase shifter while measuring the quantity $\langle a^\dagger a \rangle$,

b2) identifying a pair of respective values of said amplitude difference and said phase difference for which the quantity $\langle a^\dagger a \rangle$ is zero due to compensation of the undesired drive of the second mode, and

b3) setting said amplitude difference and said phase difference at said pair of respective values.

Alternatively, the quantum system further comprising an additional microwave source arranged to deliver radiation through said flux lines to modulate the differential flux at a frequency equal to the second resonant frequency, operation b) includes:

b4) turning on said additional microwave source at a frequency equal to the second resonant frequency, and
b5) tuning the amplitude and phase of said additional microwave source to compensate for the undesired drive of the second mode.

According to one or more embodiments, operation d) includes varying the phase of the third microwave source while keeping the phase of the second microwave source constant.

According to one or more embodiments, operation d) includes measuring the quantity $\langle a^\dagger a \rangle$ by performing a longitudinal readout with the second microwave source.

According to one or more embodiments, the method further comprises the following operation:

g) setting the phase difference between the first microwave source and the second microwave source to zero.

According to one or more embodiments, operation g) includes setting the respective phases of the first microwave source, the second microwave source and the third microwave source equal to each other.

According to one or more embodiments, operation f) includes setting the amplitude of the second microwave source at a value at which the amplitude of the complex number $\lambda$ is less than or equal to 1.

According to one or more embodiments, operation f) includes setting the amplitude of the second microwave source at a value at which the amplitude of the complex number $\lambda$ is substantially equal to 1.

The Applicant also proposes a computer program comprising instructions whose execution, by at least one processor, results in the implementation of the method described above.

The Applicant also proposes a computer-readable storage medium comprising the above-mentioned computer program stored thereon.

Finally, the Applicant proposes a device for calibrating the quantum system described above.

The device is arranged to:

- turn on the first microwave source at a frequency equal to the absolute value of the difference between twice the first resonant frequency and the second resonant frequency along with the second microwave source at a frequency equal to the second resonant frequency,
- compensate an undesired drive of the second mode caused by the second microwave source,
- turn on the third microwave source at a frequency equal to the second resonant frequency,
- for one or more amplitude values of the second microwave source, vary the phase difference between the second microwave source and the third microwave source while measuring a quantity $\langle a^\dagger a \rangle$,
- determine the respective value of the amplitude of the complex number $\lambda$ corresponding to each amplitude value of the second microwave source on the basis of the evolution of the quantity $\langle a^\dagger a \rangle$ as a function of said phase difference for said amplitude value of the second microwave source, and derive a linear relationship between the amplitude of the second microwave source and the amplitude of the complex number $\lambda$, and - set the amplitude of the second microwave source at a value at which the amplitude of the complex number $\lambda$ is substantially equal to a desired value based on said linear relationship, and set said phase difference at a value at which the quantity $\langle a^\dagger a \rangle$ is minimal.

Other features and advantages of the invention will become apparent from the following description provided for indicative and non-limiting purposes, with reference to the accompanying drawings, wherein:

- Figure 1 schematically illustrates a quantum system comprising a non-linear superconducting quantum circuit and a command circuit,

- Figure 2 illustrates the respective Wigner functions of a standard cat qubit and a bosonic qubit stabilized by the quantum system of figure 1,

- Figure 3 illustrates an explicit diagram of the quantum system of figure 1,

- Figure 4 illustrates a partial electrical equivalent diagram of a first galvanic example implementation of the quantum system of figure 3,

- Figure 5 illustrates a partial electrical equivalent diagram of a second galvanic example implementation of the quantum system of figure 3,

- Figure 6 illustrates a partial electrical equivalent diagram of a capacitive example implementation of the quantum system of figure 3,

- Figure 7 illustrates the bit-flip rate of the bosonic qubit stabilized by the quantum system of figure 1 as a function of the number of photons,

- Figure 8 illustrates the non-adiabatic errors of the quantum system of figure 1 resulting from the implementation of a Z gate,

- Figure 9 illustrates a comparison of the non-adiabatic errors between the bosonic qubit stabilized by the quantum system of figure 1 and a theoretical squeezed cat qubit,

- Figure 10 illustrates the bit-flip rate of the bosonic qubit stabilized by the quantum system of figure 1 as a function of the ratio of the respective zero-point fluctuations of the superconducting phase of the bosonic qubit mode and the buffer mode,

- Figure 11 illustrates an asymmetrically threaded superconducting quantum interference device (ATS) in detail,

- Figure 12 illustrates a compensation module coupled to an ATS,

- Figure 13 illustrates a compensation graph obtained using the compensation module of figure 12,

- Figure 14 illustrates a zoom on the nebula of the compensation graph of figure 13,

- Figure 15 illustrates the evolution of the number of photons as a function of the phase difference between a longitudinal pump and a buffer drive for different amplitudes of the longitudinal pump,

- Figure 16 illustrates the curve obtained by keeping the amplitude of the buffer drive constant,

- Figure 17 illustrates the fitting of the amplitude of the cat moon parameter to the amplitude of the longitudinal pump,

- Figure 18 illustrates several experimental and theoretical Wigner tomographies for different values of the amplitude of the longitudinal pump,

- Figure 19 illustrates a zoom on the curve of figure 16,

- Figure 20 illustrates several Wigner tomographies each corresponding to respective point of the curve of figure 19,

- Figure 21 schematically illustrates a device for calibrating the quantum system of figure 1, and

- Figure 22 schematically illustrates the method of calibrating the quantum system of figure 1.

The drawings and the following description are comprised for the most part of positive and well-defined features. As a result, they are not only useful in understanding the invention, but they can also be used to contribute to its definition, should the need arise.

A. Cat qubits

So far, the Applicant's work has been generally concerned with the stabilization of cat qubits. The possibility of realizing such a qubit has been demonstrated by R. Lescanne et al. in "Exponential suppression of bit-flips in a qubit encoded in an oscillator" (Nature Physics, 2020) demonstrated that such cat qubits can be stabilized with a non-linear conversion between two photons of a first mode a - memory mode or cat qubit mode - and one photon of a second mode b - buffer mode.

A cat qubit is defined as a two-dimensional manifold spanned by the so-called cat states $|C_\alpha^\pm\rangle$ which are superpositions of two coherent states $|\alpha\rangle$ and $|-\alpha\rangle$:

$$|C_\alpha^\pm\rangle = N^\pm(|\alpha\rangle \pm |-\alpha\rangle)$$

with:

$$N^{\pm} = \frac{1}{\sqrt{2(1 \pm e^{-2|\alpha|^2})}}$$

Stabilized cat qubits are known to benefit from a high noise bias, which means that the bit-flip probability is exponentially smaller than the phase-flip probability. More precisely, an effective error channel (e.g., bit errors or "bit-flips") is suppressed in an exponential way with the "size" - i.e. the average number of photons $\overline{n} = |\alpha|^2$ - of the Schrödinger cat states of the cat qubits. As previously mentioned, this exponential suppression of bit-flip errors is only at the cost of linear increase of phase-flip errors.

According to current knowledge, this suppression should apply to a large class of physical noise processes having a local effect on the phase space of a harmonic oscillator. This includes, but is not limited to, photon loss, thermal excitations, photon dephasing, and various nonlinearities induced by coupling to a Josephson junction.

Recent experiments in the context of quantum superconducting circuits have observed this exponential suppression of bit-flip errors with the average number of photons in the cat states.

A.1 Stabilization schemes

The cat qubits can be stabilized or confined by the following exemplary schemes:

a) a parametric dissipative stabilization, with jump operator $L_2 = \sqrt{\kappa_2}(a^2 - \alpha^2)$, where $\kappa_2$ is the two-photon dissipation rate, $a$ is the photon annihilation operator of the memory mode a and $\alpha$ is a complex number defining the cat qubit. This jump operator can be realized by coupling a lossy buffer mode b with dissipation rate $\kappa_b$, and a four-wave mixing device - typically a Josephson junction or an ATS - to the cat qubit mode a and by engineering the Hamiltonian

$$H/\hbar = g_2(a^2 - \alpha^2)b^{\dagger} + \text{h. c.}$$

, where b is the photon annihilation operator of the buffer mode b and $g_2$ is the two-photon coupling rate, by applying to the four-wave mixing device a pump at frequency $|2f_a - f_b|$ and a drive of the buffer mode b at frequency $f_b$ provided $g_2 < \kappa_b$.

b) a Kerr Hamiltonian $H/\hbar = \frac{K}{2}(a^{\dagger 2} - \alpha^2)\left(a^2 - \overline{\alpha^2}\right)$, where $K$ is the amplitude of the Kerr Hamiltonian, $a$ is the photon annihilation operator, and $|\alpha|^2$ is the mean photon number.

c) a detuned Kerr Hamiltonian $H/\hbar = \frac{K}{2}(a^{\dagger 2} - \alpha^2)\left(a^2 - \overline{\alpha^2}\right) - \Delta a^{\dagger}a$, where $K$ is the amplitude of the Kerr Hamiltonian, $a$ is the photon annihilation operator, $\alpha$ is a complex number defining the cat qubit, and $\Delta$ is the detuning factor.

d) a two-photon exchange (TPE) Hamiltonian $H/\hbar = g_2(a^2 - \alpha^2)\sigma_+ + \text{h. c.}$, where $g_2$ is the complex two-photon coupling rate, $a$ is the photon annihilation operator, $\alpha$ is a complex number defining the cat qubit, and $\sigma_{\pm}$ are the lowering and raising operators of the two-level system. This Hamiltonian can be engineered in the same way as the parametric dissipative stabilization a).

e) a DC dissipative stabilization, for which the Applicant filed the European patent application EP 23306839.4, in which a cat qubit is stabilized in the spirit of the previous stabilization scheme a), except that the two-photon pump that engineers the non-linear conversion between two photons of the memory mode a and one photon of the buffer mode b is replaced with a DC voltage source which biases a non-linear element formed exclusively of one or more Josephson junctions; the two-photon coupling rate $g_2$ is therefore not limited by the amplitude of the two-photon pump:

$$g_2 = \frac{E_J}{4}\varphi_a^2\varphi_b$$

, where $E_J$ is the Josephson energy of the one or more Josephson junctions, $\varphi_a$ is the zero-point fluctuation of the phase of the memory mode a, and $\varphi_b$ is the zero-point fluctuation of the phase of the buffer mode b.

f) a resonant dissipative stabilization, with jump operator $L_2 = \sqrt{\kappa_2}(a^2 - \alpha^2)$ , where $\kappa_2$ is the two-photon dissipation rate, $a$ is the photon annihilation operator of the memory mode a and $\alpha$ is a complex number defining the cat qubit. This jump operator can be realized by coupling a lossy buffer mode b with dissipation rate $\kappa_b$, and a three-wave mixing device to the cat qubit mode a which engineers the Hamiltonian $H/\hbar = g_2(a^2-\alpha^2)b^\dagger + h.\,c.$, where b is the photon annihilation operator of the buffer mode b provided the mode frequencies verify substantially $2f_a = f_b$ and $g_2 < \kappa_b$ to which a drive of the buffer mode at frequency $f_b$ is added.

The following subsection focuses on a particular stabilization scheme: the dissipative squeezing stabilization.

## A.2 The squeezed cat qubit

Cat qubits have the property to allow the realization of quantum gates such as the Z or the CNOT gate while maintaining the noise bias. The characteristics which are used to assess the quality of a quantum gate are its execution time, i.e. the time for the quantum gate to operate, and the associated error probability. For cat qubits, the phase-flip error probability at the optimal time of the gate depends on the ratio $\kappa_1/\kappa_2$ , where $\kappa_1$ is the single photon loss rate - or error rate since it leads to phase-flip errors - of the cat qubits used to perform the quantum gate, and $\kappa_2$ is the two-photon dissipation rate - also called correction or stabilization rate - of these cat qubits. The smaller $\kappa_1/\kappa_2$ is, the better the gate fidelity gets.

It is generally considered that the use of a single repetition code is sufficient to correct the remaining errors as bit-flip errors are sufficiently rare; and, more particularly, a phase-flip error correction code is sufficient to correct the remaining phase-flip. This can be for instance a repetition code defined in the dual base or any other state-of-the-art error correction code.

However, even if the cat qubit has a high noise bias, which is a particularly advantageous feature in the perspective of realizing a quantum error correction and thus designing a reliable quantum computer, it appears that such a noise bias might not be enough for large-scale quantum algorithm with a simple repetition code. In this context, it was recently highlighted that a particular family of cat qubits have an even higher noise bias: the squeezed cat qubits.

The squeezed cat states also have less non-adiabatic errors during the period of time of a quantum gate, such as a Z gate or a CNOT gate. Overall, reducing the non-adiabatic errors allows to reduce the requirement on the ratio $\kappa_1/\kappa_2$.

The squeezed states $|\alpha, \xi\rangle$ are defined as:

$$|\alpha, \xi\rangle = D(\alpha)S(\xi)|0\rangle$$

with $D(\alpha)$ the displacement operator:

$$D(\alpha) = e^{\alpha a^\dagger - \alpha^* a}$$

And S(^) the squeezing operator:

$$S(\xi) = e^{\frac{1}{2}[(\xi^* a^2 - \xi a^{\dagger^2})]}$$

where: $\xi$ is the complex squeezing parameter with norm $r = |\xi|$.

The squeezed cat states are defined as the coherent superposition of two squeezed states with opposite displacement amplitudes and identical squeezing:

$$|C_{\alpha,\xi}^{\pm}\rangle = \frac{1}{N_{\alpha,\xi}^{\pm}}(|\alpha, \xi\rangle \pm |-\alpha, \xi\rangle)$$

where: $N_{\alpha,\xi}^{\pm}$ is a normalization constant.

Note that to have proper squeezed cat states the complex phase of $\alpha$ and $\xi$ must follow:

$$\alpha = |\alpha|e^{i\theta}$$

$$\xi = re^{2i\theta}$$

The dissipative squeezing stabilization is based on the following jump operator:

$$L_{SC} = \sqrt{\kappa_2}\left(\left(\cosh(r)a + \sinh(r)e^{i\theta}a^\dagger\right)^2 - \alpha^2\right)$$

where: $\kappa_2$ is the two-photon dissipation rate, $a$ is the photon annihilation operator, $\alpha$ is a complex number defining the cat qubit, $r$ and $\theta$ are the modulus and argument of the complex squeezing parameter $\xi = re^{i\theta}$.

This jump operator can be realized by coupling a lossy buffer mode b with dissipation rate $\kappa_b$, and a four-wave mixing device - typically a Josephson junction or an ATS - to the cat qubit mode and by engineering the Hamiltonian

$$H/\hbar = g_2 L_{SC} b^\dagger + \mathrm{h.c.}$$ , where b is the photon annihilation operator of mode b.

While the dissipation of the cat qubit is of the form $D[a^2 - \alpha^2]$, that of the theoretical squeezed cat qubit is of the following more complicated form $D[\cosh(r)^2 a^2 + \sinh(r)^2 a^{\dagger 2} + \cosh(r)\sinh(r)(2a^\dagger a + 1) - \alpha^2]$, where $\xi$ and $\alpha$ are assumed to be real numbers without loss of generality. More particularly, the dissipative squeezing stabilization is engineered through the interaction term $[\cosh(r)^2 a^2 + \cosh(r)\sinh(r)(2a^\dagger a + 1) + \sinh(r)^2 a^{\dagger 2} - \alpha^2] b^\dagger + \mathrm{h.c.}$

Consequently, the theoretical implementation of the stabilization of the squeezed cat qubit relies on generating four particular terms:

i) $a^2 b^\dagger + \mathrm{h.c.}$: this first term corresponds to the non-linear conversion between two photons of a first mode a - the memory - and one photon of a second mode b - the buffer. This term requires a pump at a frequency $|2f_a - f_b|$, where $f_a$ is the resonant frequency of the first mode a and $f_b$ is the resonant frequency of the second mode b.

ii) $a^\dagger a b^\dagger + \mathrm{h.c.}$: this second term corresponds to a longitudinal coupling between the first mode a and the second mode b. This term can be obtained with a pump at a frequency $f_b$.

iii) $a^{\dagger 2} b^\dagger + \mathrm{h.c.}$: this third term requires a pump at a frequency $2f_a + f_b$.

iv) $\alpha^2 b^\dagger + \mathrm{h.c.}$: this fourth term requires the drive of the second mode b at a frequency $f_b$.

It must be noted that a so-called "standard cat qubit" is stabilized by only generating the first term $a^2 b^\dagger + \mathrm{h.c.}$ and the fourth term $\alpha^2 b^\dagger + \mathrm{h.c.}$.

However, a considerable obstacle to the use of squeezed cat qubits is the difficulty of engineering such a dissipative squeezing stabilization. This obstacle is above all due to the multiplicity of terms to be engineered using pumps, which jeopardizes the stability of the system, increases thermal population or reduces coherence times. In addition, it must be noted that the generation of the third term requires a very high frequency $2f_a + f_b$, around 15 gigahertz (GHz) assuming that the frequencies $f_a$ and $f_b$ are each typically of 5 gigahertz (GHz). The amount of energy to be injected into the system to reach such a frequency has detrimental effects on the coherence of the system. Moreover, the phase and amplitude of the pump at frequency $2f_a + f_b$ - for generating the third term $a^{\dagger 2} b^\dagger$ - must be precisely tuned with respect to the phase and amplitude of the pump at frequency $f_b$ - for generating the second term $a^\dagger a b^\dagger$ - and the drive of the second mode b at frequency $f_b$ - for generating the fourth term $\alpha^2 b^\dagger$.

Therefore, it appears that squeezed cat qubits, although theoretically offering a higher noise bias than cat qubits, are currently not possible to stabilize due to the multiple difficulties of implementing the required dissipation. On the other hand, cat qubits are possible to stabilize but impose extreme conditions of use to achieve a sufficient noise bias and thus run a large-scale quantum algorithm. This fact was the subject of a recent publication by E. Gouzien et al. (2023): "Computing 256-bit Elliptic Curve Logarithm in 9 Hours with 126133 Cat Qubits" (arXiv:2502.06639).

B. The moon cat qubit

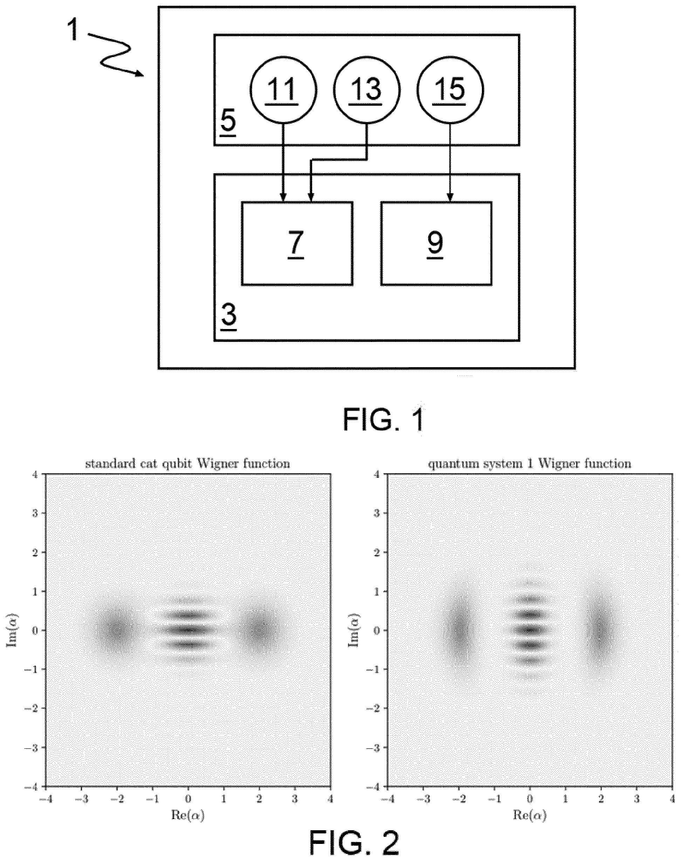

Figure 1 illustrates a schematic diagram of a quantum system 1 arranged to stabilize a particular type of bosonic qubit: a moon cat qubit.

The quantum system 1 comprises a non-linear superconducting quantum circuit 3 and a command circuit 5.

The non-linear superconducting quantum circuit 3 is arranged to make possible four-wave mixing between a first mode a and a second mode b. In the following, the first mode a hosts a moon cat qubit, while the second mode b is dissipative and is used as a buffer in between the moon cat qubit and the external environment.

In the remainder of the description, the first mode a is referred to as the memory mode, while the second mode b is referred to as the buffer mode.

The memory mode a and the buffer mode b correspond to natural resonant frequencies of the non-linear superconducting quantum circuit 3. Consequently, the memory mode a and the buffer mode b each have a respective resonant frequency. The memory mode a has a resonant frequency $f_a = \frac{\omega_a}{2\pi}$ and the buffer mode b has a resonant frequency $f_b = \frac{\omega_b}{2\pi}$, where $\omega_a$ and $\omega_b$ are the respective angular frequencies of the memory mode a and the buffer mode b.

By "having" a memory mode and a buffer mode, it should be understood here that the non-linear superconducting quantum circuit 3 comprises components operating in a superconducting regime which host the modes independently of each other or concurrently. In other words, the memory mode a and the buffer mode b may be hosted in different subsets of components of the superconducting circuit or on the same subset of components.

The memory mode a has a high-quality factor $Q_a$ while the buffer mode b has a low-quality factor $Q_b$. As will be appreciated, the quality factor (Q-factor) can be determined in various ways, for instance by: (a) spectroscopic linewidth measurement, wherein the quality factor is given by $Q = f/\Delta f$, wherein $f$ is resonant frequency and $\Delta f$ is the spectroscopic linewidth; or (b) via a time-domain measurement wherein a tone is sent in, and a return signal is measured after a pre-determined time, wherein $Q = f * \tau$ with $\tau$ the characteristic decay time. Of course, the skilled person would be aware of various other methods for determining the quality factor of a particular mode.

The non-linear superconducting quantum circuit 3 is intended to be subject to microwave radiations delivered by the command circuit 5 in order to engineer various non-linear interaction between the memory mode a and the buffer mode b. The frequency of each microwave radiation is tuned to select specific terms within the rotating-wave approximation.

As detailed below, the non-linear superconducting quantum circuit 3 is intended to interact with the command circuit 5 for engineering a particular Hamiltonian H yielding, through dissipation of the buffer mode b, an effective dissipator which stabilizes a two-dimensional manifold hosting the moon cat qubit.

Such a Hamiltonian H can be expressed in the following form:

$$H/\hbar = \text{g}_2(a^2 + \lambda a^\dagger a - \alpha^2)b^\dagger + \text{h.\,c.}$$

Each term of the Hamiltonian H will be explained and detailed below.

The non-linear superconducting quantum circuit 3 comprises a four-wave mixing non-linear element 7 and at least one resonant portion 9.

The four-wave mixing non-linear element 7 is arranged to be parametrically driven by the command circuit 5 to cause the non-linear superconducting quantum circuit 3 to engineer the required Hamiltonian H for stabilizing the moon cat qubit.

More particularly, the four-wave mixing non-linear element 7 is an asymmetrically threaded superconducting quantum interference device - or ATS hereinafter. It is known to the skilled person that an ATS can be used to engineer the 2-to-1 photon conversion, i.e. the first term $a^2b^\dagger + $ h. c. of the above-mentioned Hamiltonian H, in order to perform a dissipative stabilization, as successfully shown by R. Lescanne *et al.* (2020).

Contrary to the first implementations of this stabilization scheme proposed by Z. Leghtas et al. in the article "Confining the state of light to a quantum manifold by engineered two-photon loss" (Science, Vol. 347, No. 6224, 2015) and S. Touzard et al. in the article "Coherent Oscillations inside a Quantum Manifold Stabilized by Dissipation" (Physical Review X 8, 023005, 2018) in which the superconducting circuit element used as a four-wave mixer was a transmon with a single Josephson junction, the solution developed by R. Lescanne *et al.* (2020) exploits the ATS design which has much lower cross-Kerr terms than the transmon and thus allowed to observe the exponential suppression of bit-flips.

The ATS has flux lines through which radiation can be delivered to modulate a common flux and/or a differential flux.

The 2-to-1 photon conversion between the memory mode a and the buffer mode b is obtained by parametrically pumping the ATS at the frequency $f_p = |2f_a - f_b|$. Advantageously, the pump frequency satisfies $f_p \gg g_2$ to make this parametric pumping work as well as possible, where $g_2$ is the two-photon coupling rate.

The particular situation where $2f_a = f_b (f_p = 0)$ is called the resonant case and may be advantageous, as developed in the European patent application EP 21306965.1 filed by the Applicant. However, in such a resonant case, the 2-to-1 photon conversion cannot be activated by parametrically pumping a four-wave mixing non-linear element such as ATS. Instead, a three-wave mixing non-linear element should be used. As we will see later, the longitudinal term of the Hamiltonian H still requires four-wave mixing to be engineered. Hence, the resonant situation, although compatible with the proposed moon cat qubit stabilization requires an extra three-wave mixing non-linear element. In other words, the resonant case requires having both three-wave mixing and four-wave mixing to generate the first term $a^2b^\dagger$ + h. c. and the second term $a^\dagger ab^\dagger$ + h. c., respectively. The three-wave mixing can arise by operating the ATS at a different flux point than the $0 - \pi$ flux point it is usually operated at or by adding another non-linear element as described in the above-mentioned European patent application EP 21306965.1.

In the present invention, the Applicant proposes to use an ATS to stabilize the moon cat qubit hence the advantage of verifying $|2f_a - f_b| \gg g_2$ or being outside the resonant regime for the 2-to-1 photon conversion.

The resonant portion 9 is arranged to be coupled or connected to the ATS 7 to provide the non-linear superconducting quantum circuit 3 with the memory mode a and the buffer mode b having respective resonant frequencies $f_a$ and $f_b$. More particularly, the memory mode a and the buffer mode b "participate" in the ATS 7, which means that a portion or the entirety of the mode magnetic energy is stored in the ATS 7. Such a participation can be quantified by a zero-point fluctuation of the superconducting phase across the ATS, noted $\varphi_a$ for the memory mode a and $\varphi_b$ for the buffer mode b.

In the schematic diagram of the quantum system 1 illustrated in figure 1, the non-linear superconducting quantum system 3 comprises only one resonant portion, i.e. the resonant portion 9. A single resonant portion can be configured to produce both the memory mode a and the buffer mode b. However, the non-linear superconducting quantum system 3 typically comprises two resonant portions to form the memory mode a and the buffer mode b respectively.

The command circuit 5 is arranged to deliver microwave radiations.

The command circuit 5 is arranged to parametrically drive the ATS 7 to implement the non-linear conversion between two photons of the memory mode a and one photon of the buffer mode b, to parametrically drive the ATS 7 to implement the longitudinal coupling between the memory mode a and the buffer mode b, and to drive the buffer mode b.

To this end and as illustrated in figure 1, the command circuit 5 comprises a first microwave source 11, a second microwave source 13 and a third microwave source 15.

The first microwave source 11 is arranged to parametrically drive the ATS 7. More particularly, the first microwave source 11 is used to implement a parametric pump delivering radiation at the frequency $|2f_a - f_b|$ to the ATS 7.

In the remainder of the description, the first microwave source 11 is referred to as the two-photon pump.

The second microwave source 13 is also arranged to parametrically drive the ATS 7. More particularly, the second microwave source 13 is used to implement a parametric pump delivering radiation at the frequency $f_b$ to the ATS 7.

In the remainder of the description, the second microwave source 13 is referred to as the longitudinal pump.

Finally, the third microwave source 15 is arranged to drive the buffer mode b by delivering a radiation at the frequency $f_b$ to the resonant portion 9.

In the remainder of the description, the third microwave source 15 is referred to as the buffer drive.

As explained above, the combined effect of the two-photon pump 11 and the buffer drive 15 allows the non-linear superconducting quantum circuit 3, and more exactly the ATS 7, to perform the non-linear conversion between two photons of the memory mode a and one photon of the buffer mode b as well as the drive of the buffer mode b.

In view of stabilizing a two-dimensional manifold hosting the moon cat qubit, which is the purpose of the quantum system 1, such a combined effect contribute to the generation of the terms $\alpha^2 b^\dagger$ + h. c. and $a^2 b^\dagger$ + h. c. to the Hamiltonian H to be engineered by the non-linear superconducting quantum circuit 3.

Moreover, the parametric pump implemented using the longitudinal pump 13 allows a longitudinal coupling between the memory mode a and the buffer mode b.

The consequence of such a longitudinal coupling is the generation of the term $a^\dagger ab^\dagger$ + h. c. which also contributes to the Hamiltonian H and thus to the stabilization of the two-dimensional manifold hosting the moon cat qubit.

In response to the radiations delivered by the command circuit 5, the non-linear superconducting quantum circuit 3 engineers a Hamiltonian H expressed as follows:

$$H/\hbar = g_2(a^2 + \lambda a^\dagger a - \alpha^2)b^\dagger + \text{h. c.}$$

where: - $g_2$ is the two-photon coupling rate - or interaction strength - proportional to the amplitude of the two-photon pump 11,

- $a$ is the annihilation operator of the memory mode a,

- $\lambda$ is a complex number which phase and amplitude result from the amplitude of the radiation induced by the longitudinal pump 13,
- $\alpha$ is a complex number resulting from the buffer drive 15,
- b is the annihilation operator of the buffer mode b,
- h. c. designates the Hermitian conjugate.

In the expression of the Hamiltonian H, it should be noted that the parameters $\lambda$ and $\alpha$ are both defined relative to the two-photon pump 11. In particular, the phase and the amplitude from which the complex number $\lambda$ results are each defined relative to the phase and amplitude of the two-photon pump 11 respectively.

In the remainder of the description, the complex number $\lambda$ is referred to as the moon cat parameter.

It may be noted that such a Hamiltonian H does not comprise the term $a^{\dagger 2}b^{\dagger}$. As explained previously, such a term requires an additional pump which would increase the complexity and threaten the stability of the system. Moreover, this term implies a very high frequency - corresponding to $2f_a + f_b$ - and pumps a quantity of energy into the system which affects the coherence of the bosonic qubit.

The Hamiltonian H yields through dissipation of the buffer mode b an effective dissipator $D[a^2 + \lambda a^{\dagger}a - \alpha^2]$ which stabilizes the two-dimensional manifold hosting the moon cat qubit.

The relative phase of the microwave sources can be adjusted to obtain the desired number of photons in the memory.

More particularly, advantageously, the phase difference between the two-photon pump 11 and the longitudinal pump 13 is substantially equal to zero. In order words, the two-photon pump 11 and the longitudinal pump 13 are configured such that their respective phases are substantially equal to each other.

Advantageously, the phase difference between the longitudinal pump 13 and the buffer drive 15 is substantially equal to zero. In order words, the longitudinal pump 13 and the buffer drive 15 are configured such that their respective phases are substantially equal to each other.

Preferably, the two-photon pump 11, the longitudinal pump 13 and the buffer drive 15 are configured such that their respective phases are substantially equal to each other.

By "substantially equal", it should be understood here that, ideally, the respective phases of the concerned microwave source are strictly equal to each other. However, in practice, such equality is difficult to achieve. Typically, the phase of one microwave source deviates by 5% from the phase of the other.

Figure 2 illustrates the respective Wigner functions - or Wigner tomographies - of a standard cat qubit and the moon cat qubit stabilized by the quantum system 1.

It can be noted that the standard cat qubit and the moon cat qubit stabilized by the quantum system 1 have the same number of photons $\bar{n} = 4$, but the latter has a bigger separation in phase-space than the standard cat qubit, meaning the two blobs are more separated. This increased separation at the same number of photons explains the increase in the noise bias.

It can be seen that each of the two blobs has a crescent moon shape. This is why the bosonic qubit stabilized by the quantum system 1 is called *"moon cat qubit"*.

B.1 Example implementations of the quantum system

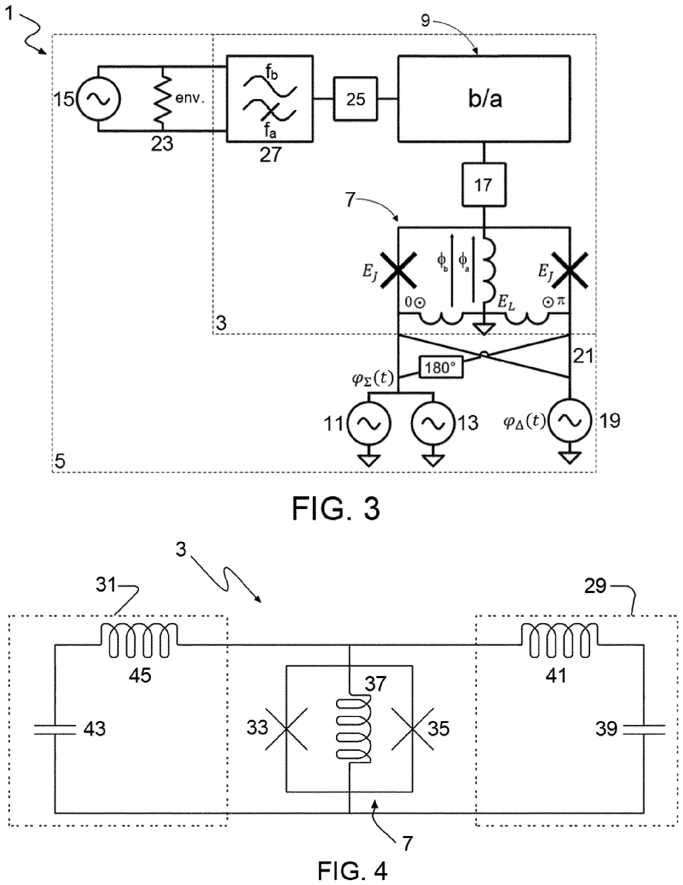

Figure 3 illustrates more explicitly the schematic diagram of figure 1.

The resonant portion 9 takes the form of a linear microwave network connected to the ATS 7 such that, when coupled via a linear coupler 17 to the ATS 7 which acts as an inductive element, the non-linear superconducting quantum circuit 3 has the memory mode a and the buffer mode b at respective resonant frequencies $f_a$ and $f_b$ which participates in the ATS 7.

The two-photon pump 11 and the longitudinal pump 13 are set-up to modulate the common flux in the ATS 7.

In the example illustrated in figure 3, the command circuit 5 further comprises a microwave source 19 set-up to modulate the differential flux in the ATS 7.

Such a microwave source 19 can be used to drive the buffer mode b by delivering a radiation at the required frequency $f_b$ to the resonant portion 9. In the sense of the present invention, the microwave source 19 can thus also be considered as the "third microwave source" or the "buffer drive" instead of the buffer drive 15.

In order to clearly distinguish the roles of the sources in the Hamiltonian, a microwave network 21 which applies the correct phase offset is shown in figure 3. Alternatively, each microwave source can be simply coupled to a single node of the ATS 7 and their relative phase and amplitude can be set so as to achieve the desired flux modulation. In that case, to modulate the common flux, the microwave sources need to address the circuit out of phase and, to modulate the differential flux, the microwave sources need to address the circuit in phase.

As explained above, the two-photon pump 11 is arranged to deliver microwave radiation to the ATS 7 at a frequency substantially equal to $|2f_a - f_b|$ to cause the non-linear superconducting quantum circuit 3 to perform the 2-to-1 photon conversion between the memory mode a and the buffer mode b, and thus to engineer the term $a^2b^\dagger$ + h. c. of the Hamiltonian H. To convert this 2-to-1 photon conversion into two-photon dissipation, the buffer mode b is selectively coupled to a load 23 via a linear coupler 25 and a microwave filter 27 configured as a band pass filter with a frequency $f_b$.

Alternatively, the microwave filter 27 may be configured as a band stop filter at a frequency $f_a$, and may be placed in between, on the one hand, the external environment and, on the other hand, the memory mode a and the buffer mode b to isolate the memory mode a and thus prevents the memory mode a from suffering additional losses coming from unwanted coupling to the load 23.

Alternatively, it may be configured as a low-pass (respectively high-pass) filter if $f_a > f_b$ (resp $f_b > f_a$). In other embodiments, the microwave filter 27 can be omitted when coupling between the load 23 and substantially only the buffer mode b can be established.

As explained above, the memory mode a has a high-quality factor $Q_a$ while the buffer mode b has a low-quality factor $Q_b$.

As explained above, the buffer drive 15 is arranged to drive the buffer mode b by delivering microwave radiation to the resonant portion 9 at a frequency substantially equal to the second resonant frequency $f_b$ in order to engineer the term $\alpha^2b^\dagger$ + h. c. of the Hamiltonian H.

Alternatively, the buffer mode b is driven by the microwave source 19 set at frequency $f_b$.

In the above, the load 23 can be seen as part of the command circuit 5 of figure 1, while the linear coupler 25 and the microwave filter 27 can be seen as part of the non-linear superconducting quantum circuit 3.

As explained above, the longitudinal pump 13 is arranged to deliver microwave radiation to the ATS 7 at a frequency substantially equal to the second resonant frequency $f_b$ to implement a longitudinal coupling between the memory mode a and the buffer mode b in order to engineer the term $a^\dagger ab^\dagger$ + h. c. of the Hamiltonian H.

B.1.1 Galvanic example implementation

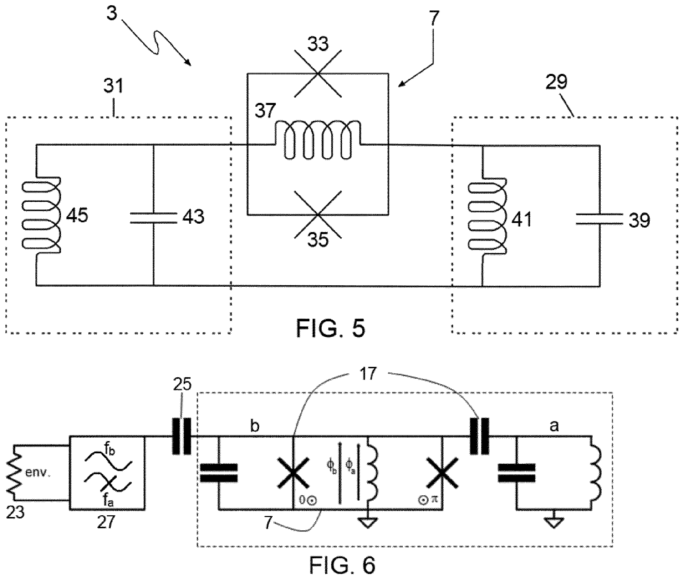

Figures 4 and 5 illustrate electrical equivalent diagrams of respective embodiments of the non-linear superconducting quantum circuit 3 which takes the form of a galvanic circuit.

Such electrical equivalent diagrams are partial since they both only represent the ATS 7 and the resonant portion 9, and thus represent neither the linear coupler 25 nor the microwave filter 27. More particularly, the resonant portion 9 includes a first resonant portion 29 and a second resonant portion 31.

The ATS 7 is realized as known in the art, for example in R. Lescanne *et al.* (2020). The ATS 7 includes a first Josephson junction 33 and a second Josephson junction 35 in parallel, and an inductive element 37 in parallel between them. As a result, the ATS 7 has two connected loops, each loop comprising a Josephson junction 33, 35 in parallel with the shunt inductive element 37. The inductive element 37 can be realized either geometrically or with a chain of junctions. The ATS 7 has both of its loops flux biased in DC and AC. The DC bias sets the working point of the ATS 7. It may be operated near the so-called saddle point, which is a sweet spot in frequency and has small cross-Kerr terms.

Both the first resonant portion 29 and the second resonant portion 31 are galvanically coupled to the ATS 7. The first resonant portion 29 confers the memory mode a having the resonant frequency $f_a$ to the non-linear superconducting quantum circuit 3, while the second resonant portion 31 confers the buffer mode b having the resonant frequency $f_b$ to the non-linear superconducting quantum circuit 3.

By "galvanically coupled", it should be understood here that there are short electrically conducting portions which connect the first resonant portion 29 and the second resonant portion 31 to the ATS 7, i.e., a short electrically conducting track or any other mean ensuring a physically continuous conducting junction. The expression "short" means that the electrically conducting track has an impedance which is negligeable compared to the impedance of the ATS 7, the first resonant portion 29 and the second resonant portion 31 at the resonant frequencies $f_a$ and $f_b$. These short electrically conducting portions correspond to the linear coupler 17.

In the embodiment of figure 4, the first resonant portion 29 includes a capacitive element 39 and an inductive element 41 which are connected in series. Similarly, the second resonant portion 31 includes a capacitive element 43 and an inductive element 45 which are connected in series.

In the embodiment of figure 5, the first resonant portion 29 also includes the capacitive element 39 and the inductive element 41. However, in such an embodiment, the capacitive element 39 and the inductive element 41 are connected in parallel. Similarly, the capacitive element 43 and the inductive element 45 of the second resonant portion 31 are connected in parallel.

In the respective embodiments of figures 4 and 5, the non-linear superconducting quantum circuit 3 includes two resonant portions. However, as previously explained, the non-linear superconducting quantum circuit 3 may comprise only one resonant portion which is arranged to produce both the memory mode a and the buffer mode b.

B.1.2 Capacitive example implementation

Figure 6 illustrates an electrical equivalent diagram of an embodiment of the non-linear superconducting quantum circuit 3 which takes the form of a capacitive circuit.

Contrary to figures 4 and 5, the external environment is represented. The ATS 7 serves as a central reference point to which the rest of the components are connected. The filtering and external environment of the buffer mode b are also present to this end. The microwave sources have been omitted for simplicity but are arranged in the same way as in figure 3 to run the circuit.

In figure 6, the linear microwave network is formed by a capacitive element galvanically coupled to the ATS 7 to form the buffer mode b and a parallel LC resonator strongly capacitively coupled to the ATS 7 to form the memory mode a. The couplings to the ATS 7 correspond to the linear coupler 17. Both the memory mode a and buffer mode b are strongly coupled to the ATS 7 as shown by the zero-point fluctuation of the phase of the two modes in central inductance of the ATS 7. The buffer is coupled to the external environment by a capacitive element which corresponds to the linear coupler 25.

B.2 Characterization of the moon cat qubit

In the present invention, the non-linear superconducting quantum circuit 3 engineers a Hamiltonian H expressed as $H/\hbar = g_2(a^2 + \lambda a^\dagger a - \alpha^2)b^\dagger + \text{h.c.}$. The Hamiltonian H yields through dissipation of the buffer mode b the effective dissipator $D[a^2 + \lambda a^\dagger a - \alpha^2]$ which stabilizes the two-dimensional manifold hosting the moon cat qubit.

If the respective phases of the second microwave 13 and the buffer drive 15 (or alternatively 19) are properly tuned, $\lambda$ and $\alpha^2$ possess the same complex phase, and can thus be taken real without loss of generality. Thus, unless otherwise stated, $\lambda$ and $\alpha$ are assumed to be real numbers.

In analogy with the even and odd cat states $|C_\alpha^\pm\rangle$, the even, respectively odd, moon cat state of the moon cat qubit hosted by the two-dimensional manifold stabilized using the quantum system 1 is a superposition of moon cat states that contain only even, respectively odd, Fock states. The expansion on Fock basis of the even moon cat state $|C_\alpha^+\rangle_{MCS}$ and the odd moon cat state $|C_\alpha^-\rangle_{MCS}$ is the following (MCS stands for *"moon cat state"*):

$$|C_\alpha^+\rangle_{MCS} = N^+ \sum_{m\geq 0} \mu_{2m}|2m\rangle$$

with:

$$\mu_{2m} = \frac{1}{\sqrt{2m!}} \prod_{q=0}^{m-1} (\alpha^2 - 2\lambda q) \ \forall \ m > 0$$

$$\mu_0 = 1$$

and:

$$|C_\alpha^-\rangle_{MCS} = N^- \sum_{m\geq 0} \mu_{2m+1}|2m+1\rangle$$

with:

$$\mu_{2m+1} = \frac{1}{\sqrt{(2m+1)!}} \prod_{q=0}^{m-1} (\alpha^2 - \lambda(2q+1)) \ \forall \, m > 0$$

$$\mu_1 = 1$$

where: $N^+$ and $N^-$ are normalization constants.

The figure of merit of the implementation of the quantum system 1 is the relative amplitude of the term $\alpha^2 b^\dagger$ + h. c. and $a^\dagger a b^\dagger$ + h. c.. In this regard, if a comparison between the moon cat qubits of the present invention and the theoretical squeezed cat qubits could be established, $\lambda$ could be expressed as a function of the complex squeezing parameter $\xi = re^{i\theta}$ as follows:

$$\lambda = 2\tanh(r)$$

Like for the squeezed cat, the bit-flip probability is exponentially decreased by increasing the value of $\lambda$ - or equivalently r for the squeezed cat.

B.3 Performances of the moon cat qubit

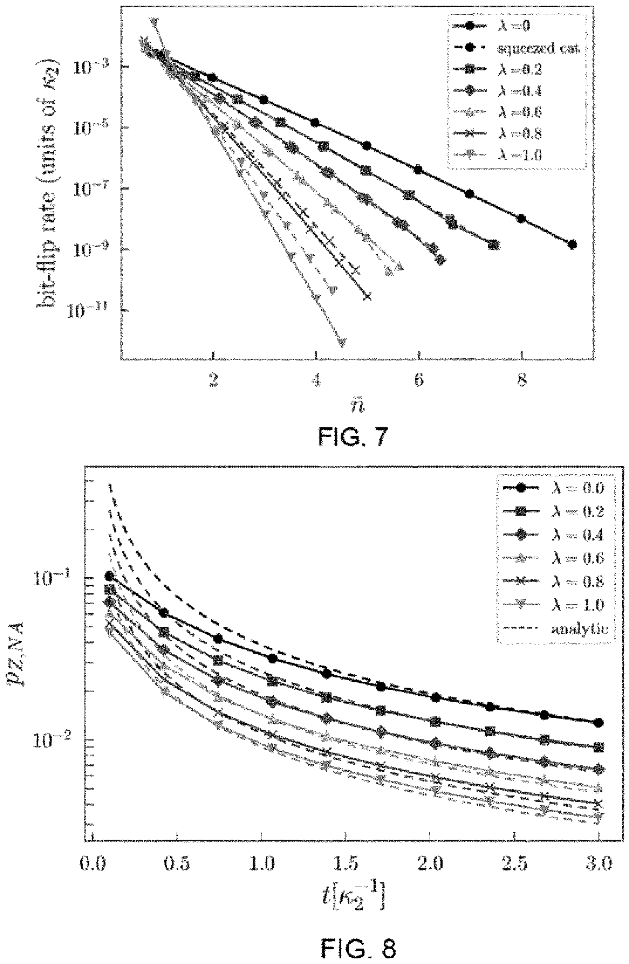

Figure 7 illustrates the bit-flip probability as a function of the number of photons and for different values of the moon cat parameter $\lambda$. More particularly, for each value of the moon cat parameter $\lambda$, there is a solid line which corresponds to the bit-flip rate of the moon cat qubit stabilized by quantum system 1 and a dotted line which corresponds to the bit-flip rate of the comparable squeezed cat qubit. By "comparable", it should be understood here that, for a given value of $\lambda$, we consider the squeezed cat qubit obtained with a parameter $r = \tanh^{-1}(\lambda/2)$ in accordance with the preceding formula.

It appears that, for $\lambda = 1$ and at a number of photons $\bar{n} = 4$, the bit-flip of the moon cat qubit stabilized by the quantum system 1 is improved by six orders of magnitude compared to the bit-flip of the standard cat qubit at the same number of photons.

Figure 7 shows that, in the case in which the value of the moon cat parameter $\lambda$ is less than or equal to 1, the moon cat qubit (solid lines) involves the same improvement in terms of bit-flip as the squeezed cat qubit (dotted lines) or even slightly better.

As previously explained, the phase and amplitude of the moon cat parameter $\lambda$ both result from the amplitude of the radiation induced by the longitudinal pump 13. Advantageously, the amplitude of the radiation induced by the longitudinal pump 13 is tuned so that the moon cat parameter $\lambda$ is equal to 1. Beyond this value, the moon cat qubit stabilized by quantum system 1 is affected by a saturation phenomenon and its performance is therefore less good than the theoretical performance of the squeezed cat qubit.

The quantum system 1 also shows less non-adiabatic errors during the implementation of the gate. The description below focuses on the Z gate, but it can be directly generalized to the CNOT gate.

During the implementation of a Z gate with a known cat qubit, i.e. a cat qubit stabilized by generating only the term $a^2 b^\dagger$ + h. c. and the term $a^2 b^\dagger$ + h. c., two kinds of error may occur:

- the single photon loss error given by $\bar{n}\kappa_1 T$, where $\bar{n}$ is the number of photons in the cat states, $\kappa_1$ is the single photon loss and T is the duration of the gate,

- the non-adiabatic errors due to the fact that the gate is performed in a finite time $\frac{\pi^2}{16\bar{n}^2\kappa_2 T}$, where $\kappa_2$ is the two-photon exchange rate. The non-adiabatic errors prevent to perform the gate as fast as possible in order to avoid the increasing of the single photon loss.

A compromise has to be found between the single photon loss error and the non-adiabatic errors since the former is proportional to the duration of the gate, whereas the latter is proportional to the inverse of the duration.

The quantum system 1 has less non-adiabatic errors than the known cat qubit. The non-adiabatic errors of the quantum system 1 during a Z gate are given by the following formula:

$$\frac{\pi^2 \dfrac{1}{(1 - \lambda^2/4)^2}}{16 \left( \bar{n} - \dfrac{\lambda^2}{4\left(1 - \frac{\lambda^2}{4}\right)} \right)^2 \left( \dfrac{1 + \frac{\lambda}{2}}{1 - \frac{\lambda}{2}} \right)^2 \kappa_2 T}$$

Figure 8 shows simulations of the non-adiabatic errors of the quantum system 1 during a Z gate as a function of the gate time in unit of $1/\kappa_2$ and for a fixed number of photons $\bar{n} = 4$. It can be seen that, when the value of the moon cat parameter $\lambda$ increases, the non-adiabatic errors are reduced. The solid lines show numerical simulations and the dotted lines the formula above-mentioned.

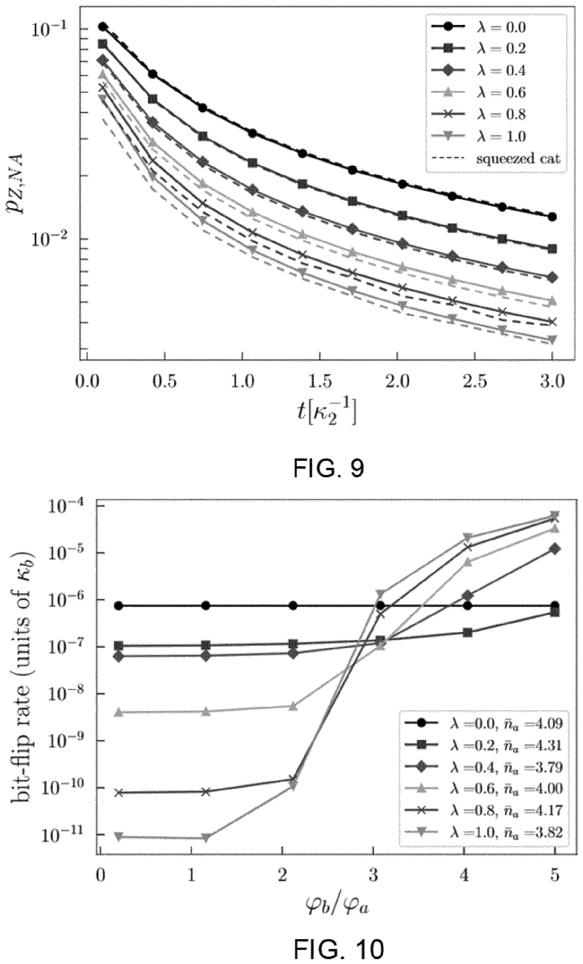

Figure 9 illustrates a comparison of the non-adiabatic errors between the moon cat qubit stabilized by the quantum system 1 (solid lines) and the squeezed cat qubit (dotted lines), and shows that the quantum system 1 performs as well as the squeezed cat qubit.

Finally, figure 10 illustrates the bit-flip rate of the moon cat qubit stabilized by the quantum system 1 as a function of the ratio $\dfrac{\varphi_b}{\varphi_a}$ with a photon number approximately given by $\bar{n}_a = 4$ in the memory mode a. The different approximate values of $\bar{n}_a$ in this figure are due to the fact that, in practice, this value is difficult to fix. This figure clearly shows that, as long as $\dfrac{\varphi_b}{\varphi_a} < 3$, the moon cat qubit stabilized by the quantum system 1 preserves an advantage over the standard cat qubit. More particularly, the curve corresponding to the standard cat qubit is that obtained for $\lambda = 0$.

It should be noted that this threshold value for $\dfrac{\varphi_b}{\varphi_a}$ depends in a non-trivial manner on the noise parameters of the quantum system 1 and on the ratio $\dfrac{g_2}{\kappa_b}$.

In figure 10, the curves correspond to the following experimentally relevant parameters:

- a ratio $\dfrac{g_2}{\kappa_b} = 0.1$,

- the photon loss rate of the buffer mode b $\dfrac{\kappa_b}{2\pi} = 60$ megahertz (MHz),

- the photon loss rate of the memory mode a $\dfrac{\kappa_a}{2\pi} = 0.05$ megahertz (MHz),

- a dephasing rate of the memory mode a $\dfrac{\kappa_\phi}{2\pi} = 0.01$ megahertz (MHz), and
- a thermal population of the memory mode a $n_{th} = 1\%$.

## C. Calibration of the quantum system

It is known to the skilled person that, when biased at its flux working point (0 - $\pi$ or conversely), the Hamiltonian $H_{ATS}$ of the ATS 7 has the following "sin-sin" form:

$$H_{ATS}/\hbar = -2E_J \sin\left(\varphi_\Sigma(t)\right) \sin(\varphi) + \frac{E_L}{2}\left(\varphi - \varphi_\Delta(t)\right)^2$$

where: - $\varphi = \varphi_a(a + a^\dagger) + \varphi_b(b + b^\dagger)$ is the total superconducting phase difference across the ATS 7,

- $\varphi_a$ is the zero-point fluctuation of the phase of the memory mode a across the ATS 7,
- $\varphi_b$ is the zero-point fluctuation of the phase of the buffer mode b across the ATS 7,
- $E_J$ is the Josephson energy of the side junctions,

- $E_L$ is the inductive energy of the central inductance,
- $\varphi_\Sigma(t)$ corresponds to a common flux modulation of the two loops of the ATS 7,
- $\varphi_\Delta(t)$ corresponds to a differential flux modulation of the two loops of the ATS 7, and
- h is the reduced Planck constant.

The common flux modulation $\varphi_\Sigma(t)$ can be implemented by delivering microwave radiations through flux lines of the ATS 7 out of phase, while the differential flux modulation $\varphi_\Delta(t)$ can be implemented by delivering microwave radiations through flux lines of the ATS 7 in phase.

Parametric pumping of the ATS 7 is typically done by pumping the common flux as pumping the differential flux merely displaces the modes coupled to the ATS 7.

As an example, by pumping the common flux at the frequency $f_p = |2f_a - f_b|$, $\varphi_\Sigma(t) = \varepsilon_p \cos(2\pi f_p t)$, the non-linear resonant part of the Hamiltonian writes in the rotating frame:

$$H_{ATS}\big/\hbar = \frac{E_J \epsilon_p \varphi_a^2 \varphi_b}{2}(a^2 b^\dagger + \text{h.c.})$$

which is typically the 2-to-1 photon exchange Hamiltonian needed to engineer the two-photon stabilization.

The Taylor expansion of the above-mentioned "sin-sin" form of the Hamiltonian $H_{ATS}$ of the ATS 7 gives the first-order term in $\varphi$ below:

$$H_{ATS,1}\big/\hbar = -\Big(2E_J\varphi_\Sigma(t) + E_L\varphi_\Delta(t)\Big)\varphi$$

When the longitudinal pump 13 delivers radiation through the flux lines of the ATS 7 to modulate the common flux at a frequency $f_b$ in order to implement a longitudinal coupling between the memory mode a and the buffer mode b, the first-order term $H_{ATS,1}$ becomes dominant in the Taylor expansion and acts as a linear drive of the buffer mode b.

Such a drive of the buffer mode b is a parasitic drive and must be compensated.

Moreover, the development of the Taylor expansion also reveals the following third-order term in $\varphi$:

$$H_{ATS,3}\big/\hbar = \frac{E_J}{3}\varphi_\Sigma(t)\,\varphi^3$$

As explained above, $\varphi$ is the total superconducting phase difference across the ATS 7 and is defined as follows:

$$\varphi = \varphi_a(a + a^\dagger) + \varphi_b(b + b^\dagger)$$

Consequently, the Hamiltonian $H_{ATS}$ of the ATS 7 now writes:

$$H_{ATS}\big/\hbar = \omega_a a^\dagger a + \omega_b b^\dagger b - (2E_J\,\varphi_\Sigma(t) + E_L\varphi_\Delta(t))(\varphi_a(a+a^\dagger) + \varphi_b(b+b^\dagger))$$

$$+ \frac{E_J}{3}\varphi_\Sigma(t)\Big(\varphi_a(a+a^\dagger) + \varphi_b(b+b^\dagger)\Big)^3 + O(\varphi^5)$$

In the rotating frame, at the frequencies $\omega_a$ for the memory mode a and $\omega_b$ for the buffer mode b, the Hamiltonian $H_{ATS}$ of the ATS 7 can be approximated as follows :

$$H_{ATS}\big/\hbar \approx -\Big(2E_J\,\varphi_\Sigma(t) + E_L\varphi_\Delta(t)\Big)(\varphi_a a e^{-i\omega_a t} + \varphi_b b e^{-i\omega_b t} + \text{h.c.})$$

$$+ \frac{E_J}{3}\varphi_\Sigma(t)\big(\varphi_a a e^{-i\omega_a t} + \varphi_b b e^{-i\omega_b t} + \text{h.c.}\big)^3$$

Assuming that longitudinal coupling between the memory mode a and the buffer mode b is activated and that the ATS 7 is driven at frequency $f_b = \frac{\omega_b}{2\pi}$, the common flux modulation $\varphi_\Sigma(t)$ and the differential flux modulation $\varphi_\Delta(t)$ can be expressed as follows:

$$\varphi_\Sigma(t) = \varphi_{\Sigma,0} e^{i\omega_b t} + \mathrm{h.\,c.}$$

$$\varphi_\Delta(t) = \varphi_{\Delta,0} e^{i\omega_b t} + \mathrm{h.\,c.}$$

In a displaced frame to remove the first-order term $H_{ATS,1}$ that acts as a linear drive of the buffer mode b, the Hamiltonian $H_{ATS}$ of the ATS 7 writes:

$$H_{ATS}/_\hbar \approx \frac{E_J}{3} (\varphi_{\Sigma,0} e^{i\omega_b t} + \mathrm{h.\,c.})(\varphi_a(a e^{-i\omega_a t} + \xi_a e^{-i\omega_b t}) + \varphi_b(b e^{-i\omega_b t} + + \xi_b e^{-i\omega_b t}) + \mathrm{h.\,c.})^3$$

where:

$$-\,\xi_a = \frac{i\varphi_a}{i(\omega_a - \omega_b) + \kappa_a/2} (2E_J \varphi_{\Sigma,0} + E_L \varphi_{\Delta,0}),$$

and

$$-\,\xi_b = \frac{i\varphi_b}{\kappa_b/2} (2E_J \varphi_{\Sigma,0} + E_L \varphi_{\Delta,0})$$

In the rotating wave approximation (RWA), the Hamiltonian $H_{ATS}$ writes:

$$H_{RWA}/_\hbar \approx \Delta_a a^\dagger a + \Delta_b b^\dagger b + g_l a^\dagger a \left(b + b^\dagger\right) + g_3(b^\dagger b^2 + b^{\dagger^2} b)$$

where: - $g_l = 2E_J \varphi_{\Sigma,0} \varphi_a^2 \varphi_b$ is a longitudinal term,

- $g_3 = 2E_J \varphi_{\Sigma,0} \varphi_b^3$ is a cubic term,

- $\Delta_a = 2E_J \varphi_{\Sigma,0} \varphi_a^2 (\varphi_a \Re(\xi_a) + \varphi_b \Re(\xi_b))$ is a stark-shift of the memory mode a, and

- $\Delta_b = 2E_J \varphi_{\Sigma,0} \varphi_b^2 (\varphi_a \Re(\xi_a) + \varphi_b \Re(\xi_b))$ is a stark-shift of the buffer mode b,

with: $\Re(\cdot)$ is the real part.

The last term of $H_{RWA}$ corresponds to a spurious and possibly detrimental non-linearity. Depending on the noise level, the moon cat qubit stabilization has to deal with, this can lead to a constraint on the ratio $\varphi_b/\varphi_a$ to ensure the last term is not too detrimental.

For the purpose of fine control of the drive of the buffer mode b, the respective amplitude and phase of $\varphi_{\Sigma,0}$ and $\varphi_{\Delta,0}$ must be adjusted to cancel the first-order term $H_{ATS,1}$. In other words:

$$\varphi_{\Delta,0} = -\frac{2E_J}{E_L} \varphi_{\Sigma,0}$$

Such a condition can be considered as the "longitudinal pump compensation".

When this condition is satisfied, it can be noted that $\xi_a = \xi_b = 0$ since $\xi_a$ and $\xi_b$ are both proportional to $2E_J \varphi_{\Sigma,0} +$

$E_L\varphi_{\Delta,0}$. In such a case, $\mathfrak{R}(\xi_a) = \mathfrak{R}(\xi_b) = 0$ and, consequently, $\Delta_a = \Delta_b = 0$.

The stark-shifts of the memory mode a and the buffer mode b are thus canceled.

C.1 The longitudinal pump compensation

The two-photon pump 11 and the longitudinal pump 13 are turned on.

As explained above, the longitudinal pump 13, which is not yet calibrated, converts the first-order term $H_{ATS,1}$ into linear drive of the buffer mode b. As a consequence, all the ingredients necessary to generate a moon cat qubit in the memory mode a are present:

- the two-photon pump 11 delivers radiation through the flux lines of the ATS 7 to modulate the common flux at a frequency $|2f_a - f_b|$ to engineer the term $a^2b^\dagger$ + h. c.,
- the longitudinal pump 13 delivers radiation through the flux lines of the ATS 7 to modulate the common flux at a frequency $f_b$ to engineer the term $a^\dagger ab^\dagger$ + h. c., and
- the longitudinal pump 13 also causes the first-order term $H_{ATS,1}$ to linearly drive the buffer mode b. Such an undesired buffer drive engineers the term $\alpha^2b^\dagger$ + h. c.

In the absence of longitudinal pump compensation, a moon cat qubit-like is generated. The number of photons $|\alpha|^2$ in the memory is proportional to the amplitude of the undesired buffer drive:

$$\alpha^2 = -\frac{\epsilon_d}{g_2}$$

where: - $\alpha$ is the complex number resulting from the undesired buffer drive,

- $\epsilon_d$ is the amplitude of the undesired buffer drive, and
- $g_2$ is the two-photon coupling rate.

The goal is to perform the longitudinal pump compensation, i.e. to cancel this parasitic buffer drive by adjusting the respective amplitude and phase of $\varphi_{\Sigma,0}$ and $\varphi_{\Delta,0}$. To this end, the Applicant has developed at least two different solutions: a compensation module and a compensation pump.

C.1.1 The compensation module

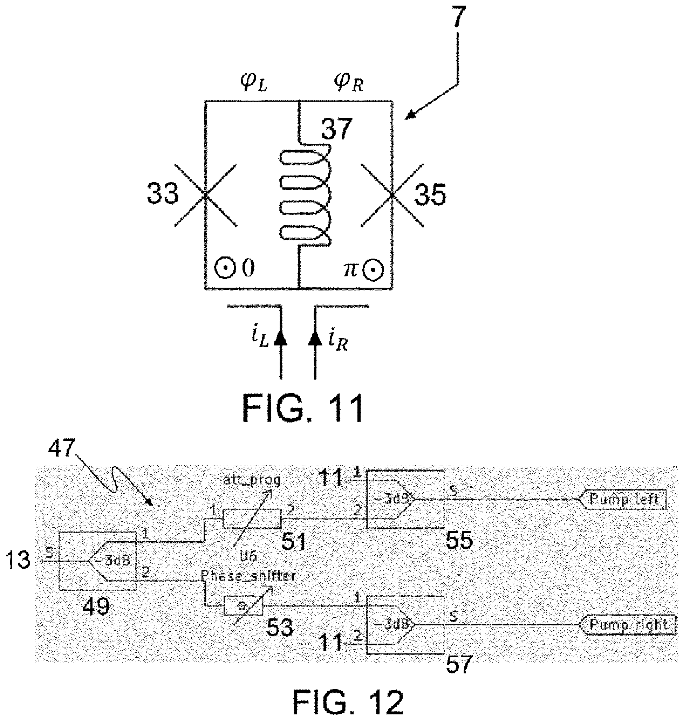

In order to explain the principle of the compensation module, reference is now made to Figure 11 which illustrates the ATS 7.

The ATS 7 includes left ("L") and right ("R") flux lines. The left flux line induces a left flux $\varphi_L$ while the right flux line induces a right flux $\varphi_R$. The left flux $\varphi_L$ is proportional to $-i_L$, where $i_L$ is the current of the left flux line, while the right flux $\varphi_R$ is proportional to $i_R$, where $i_R$ is the current of the right flux line.

The left and right flux together generate the common flux $\varphi_\Sigma$, which is half the sum of the left and right flux, and the differential flux $\varphi_\Delta$, which is half the difference between the right and left flux. In other words:

$$\varphi_\Sigma = \frac{\varphi_R + \varphi_L}{2}$$

$$\varphi_\Delta = \frac{\varphi_R - \varphi_L}{2}$$

Figure 12 illustrates a compensation module 47.

The compensation module 47 is arranged, on the one hand, to couple the longitudinal pump 13 to the ATS 7 via the left flux line (*"Pump left"*) and the right flux line (*"Pump right"*) and, on the other hand, to vary the relative amplitude and phase of $\varphi_{\Sigma,0}$ and $\varphi_{\Delta,0}$.

To this end, the compensation module 47 includes an RF power divider (or splitter) 49, an RF variable attenuator 51 and an RF phase shifter 53.

The RF power divider 49 is arranged to divide the output of the longitudinal pump 13 into two signals of equal power. In the example of figure 12, the power loss is equal to 3 dB on each of power lines 1 and 2 at the output of the RF power divider 49.

The RF variable attenuator 51 is arranged to vary the relative amplitude of $\varphi_{\Sigma,0}$ and $\varphi_{\Delta,0}$. The amplitude difference between $\varphi_{\Sigma,0}$ and $\varphi_{\Delta,0}$ depends on a voltage $V_{att}$ applied to the RF variable attenuator 51.

The RF phase shifter 53 is arranged to vary the relative phase of $\varphi_{\Sigma,0}$ and $\varphi_{\Delta,0}$. The phase difference between $\varphi_{\Sigma,0}$ and $\varphi_{\Delta,0}$ depends on a voltage $V_{ph}$ applied to the RF phase shifter 53.

In the example of figure 12, the RF variable attenuator 51 is on the power line 1 at the output of the RF power divider 49 while the RF phase shifter 53 is on the power line 2 at the output of the RF power divider 49. However, their respective positions can be switched.

Furthermore, the longitudinal pump 13 is not the only microwave source that needs to be coupled to the ATS 7: the two-photon pump 11 also needs to be coupled to the ATS 7.

To this end, the compensation module 47 further comprises a first RF power combiner 55 and a second RF power combiner 57. The first RF power combiner 55 and the second RF power combiner 57 both make it possible to combine two power signals into one power signal.

The two-photon pump 11 is also provided with an RF power divider (not shown here) similar to the RF power divider 49 and which divides the output of the two-photon pump 11 into two signals of equal power. The first of the two power signals is combined with one of the two power signals at the output of the RF power divider 49 using the first RF power combiner 55, while the second of the two power signals is combined with the other power signal at the output of the power divider 49 using the second RF power combiner 57.

It should be noted that, in absolute terms, four variables would have to be taken into account: the amplitude of $\varphi_{\Sigma,0}$, the phase of $\varphi_{\Sigma,0}$, the amplitude of $\varphi_{\Delta,0}$ and the phase of $\varphi_{\Delta,0}$. However, it is sufficient and easier to work only on two variables: the relative amplitude of $\varphi_{\Sigma,0}$ and $\varphi_{\Delta,0}$ and the relative phase of $\varphi_{\Sigma,0}$ and $\varphi_{\Delta,0}$.

Using the compensation module 47, the relative amplitude and phase of $\varphi_{\Sigma,0}$ and $\varphi_{\Delta,0}$ are varied. In addition, the number of photons in the memory is measured. The result is a three-dimensional graph - the so-called compensation graph - showing the number of photons in the memory as a function of the amplitude difference and phase difference between $\varphi_{\Sigma,0}$ and $\varphi_{\Delta,0}$.

It is well known to the skilled person that there are many techniques for measuring the number of photons in the memory. In the present case, the quantity $\langle a^\dagger a \rangle$ is measured to determine the number of photons in the memory in the steady state. Among the known techniques, it is advantageous to perform longitudinal readout for taking advantage of the longitudinal coupling between the memory mode a and the buffer mode b. In particular, the longitudinal readout has a high signal-to-noise ratio.

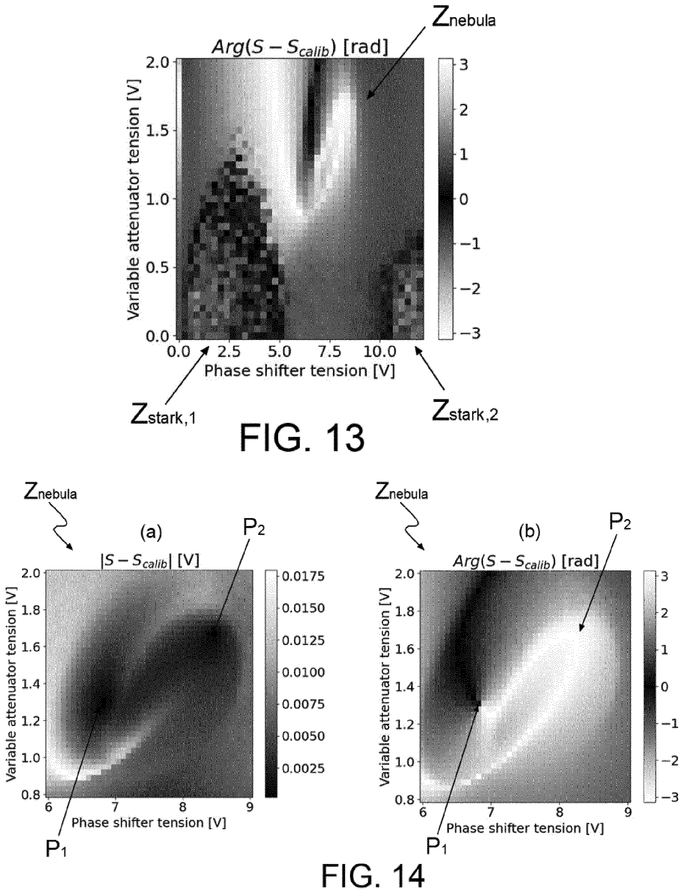

Figure 13 shows the compensation graph, i.e. the evolution of the quantity $\langle a^\dagger a \rangle$ as a function of the relative amplitude and phase between $\varphi_{\Sigma,0}$ and $\varphi_{\Delta,0}$.

More precisely, the x-axis of the compensation graph is the voltage $V_{ph}$ applied to the RF phase shifter 53, while the y-axis is the voltage $V_{att}$ applied to the RF variable attenuator 51.

Moreover, in the example of figure 13, the measurement method is the longitudinal readout. The signal measured through the longitudinal readout is the following:

$$S = S_{calib} + \beta(V_{ph}, V_{att})\langle a^\dagger a \rangle$$

where: - S is the measured signal,

- $S_{calib}$ is the signal of the quantum system 1 at rest, and
- $\beta(V_{ph}, V_{att})$ is the slope of the longitudinal readout when the voltage applied to the RF phase shifter 53 is $V_{ph}$ and the voltage applied to the RF variable attenuator 51 is $V_{att}$.

The signal $S_{calib}$ is obtained after a reset of the quantum system 1 to reduce the number of photons in the memory as much as possible. By way of example, such a reset can be carried out by turning on an interaction between the memory mode a and the buffer mode b to implement a conversion between one photon of the memory mode a and one photon of the buffer mode b, which enables the memory to be cooled to the temperature of the buffer. It should be noted that, even with such a reset, the memory is not completely emptied: a few photons remain due to the thermal population.

It should be noted that the quantity S - $S_{calib}$ is proportional to the number of photons $\langle a^\dagger a \rangle$.

In the case of longitudinal pump compensation, the first-order term $H_{ATS,1}$ ceases to play the role of linear drive of the buffer mode b. As a result, only two of the three ingredients of the stabilization of the moon cat qubit are present: the non-linear conversion between two photons of the memory mode a and one photon of the buffer mode b. So there are very few photons in the memory; in particular, a few photons remain due to the thermal population. Consequently, the zeros of the compensation graph are considered.

As such, the analysis of the compensation graph reveals three remarkable zones: $Z_{stark,1}$, $Z_{stark,2}$ and $Z_{nebula}$.

Each of these zones contains several zeros, i.e. points at which there is no photon in the memory. The question arises as to which zero is relevant, i.e. the zero corresponding to longitudinal pump compensation.

Longitudinal pump compensation is not the only case in which no moon cat qubit is stabilized and therefore no photon is present in the memory. Indeed, certain amplitude or phase differences cause a stark-shift of the frequency $f_a$ of the memory mode a or the frequency $f_b$ of the buffer mode b.

Yet, the vicinity of a point at which a stark-shift occurs includes several other points at which a stark-shift occurs. It can be deduced that the zones $Z_{stark,1}$ and $Z_{stark,2}$, which both include a large number of clustered zeros, correspond to stark-shifts. On the compensation graph, the zones $Z_{stark,1}$ and $Z_{stark,2}$ appear as separate zones; however, by periodicity, these two zones $Z_{stark,1}$ and $Z_{stark,2}$ form together a single zone. These two zones $Z_{stark,1}$ and $Z_{stark,2}$ are therefore discarded.

The zero sought is therefore in the remaining zone $Z_{nebula}$, which takes the form of a nebula.

Figure 14 is a zoom on the zone $Z_{nebula}$ of the compensation graph. In particular, diagram (a) represents the evolution of $|S - S_{calib}|$, while diagram (b) represents the evolution of $\arg(S - S_{calib})$, where $\arg(\cdot)$ is the argument.

Diagram (a) shows two zeros $P_1$ and $P_2$. These two zeros $P_1$ and $P_2$ can be explained by the fact that $S - S_{calib}$ is a product of two factors: $\beta(V_{ph}, V_{att})$ and $\langle a^\dagger a \rangle$. The factor $\beta(V_{ph}, V_{att})$ is a holomorphic function of $V_{ph}$ and $V_{att}$ that can be zero, while the factor $\langle a^\dagger a \rangle$ corresponds to the number of photons and is therefore zero in the case of longitudinal pump compensation.

To identify which of the points $P_1$ and $P_2$ corresponds to longitudinal pump compensation, it may be noted that such compensation does not depend on the power of the two-photon pump 11 or the power of the longitudinal pump 13. The zero sought is therefore the point that is invariant to the variation in pump power. Another way is to note that the zero sought is the one without the $2\pi$ phase roll.

Diagram (b) shows that the zero corresponding to longitudinal pump compensation is the zero $P_2$.

The point corresponding to the longitudinal pump compensation can be reached by selecting the appropriate voltage $V_{ph}$ to apply to RF phase shifter 53 and the appropriate voltage $V_{att}$ to apply to RF variable attenuator 51.

### C.1.2 The compensation pump

As explained above in subsection B.1, it is possible to drive the buffer mode b with a microwave source that is set-up to modulate the differential flux in ATS 7. In the example implementation of figure 3, such a microwave source is the microwave source 19.

In subsection B.1, the microwave source 19 is used as an alternative to the buffer drive 15. However, the microwave source 19 can be used as an additional pump to compensate for the parasitic linear drive caused by the longitudinal pump 13. In the remainder of the description, the microwave source 19 is referred to as the compensation pump.

To this end, the compensation pump 19 delivers radiation through the flux lines of the ATS 7 to modulate the differential flux at the frequency $f_b$. More particularly, the amplitude and phase of the compensation pump 19 are fine-tuned to compensate for the linear drive of the buffer mode b.

### C.2 The calibration of the phase difference between the longitudinal pump 13 and the buffer drive 15 along with the calibration of the amplitude of the longitudinal pump 13

The buffer drive 15 is turned on. Such a buffer drive can be expressed as follows:

$$\epsilon_d(t) = \epsilon_d e^{i\omega_d t} + \mathrm{h.\,c.}$$

where: $\varepsilon_d$ is a complex number and $\omega_d$ is the angular frequency of the buffer drive 15 such as $\omega_d = 2\pi f_d$. The amplitude and phase of the buffer drive 15 correspond to the amplitude and phase of the complex number $\varepsilon_d$ respectively.

As a consequence, the remaining ingredient necessary to generate a moon cat qubit in the memory mode a is present: the buffer drive 15 delivers radiation at a frequency $f_b$ to the resonant portion 9, and more particularly to the part of the linear microwave network that provides the non-linear superconducting quantum circuit 3 with the buffer mode b.

The non-linear superconducting quantum circuit 3 engineers a Hamiltonian H expressed as:

$$H/\hbar = g_2(a^2 + \lambda a^\dagger a - \alpha^2)b^\dagger + \mathrm{h.\,c.}$$

The Hamiltonian H yields through dissipation of the buffer mode b an effective dissipator $D[a^2 + \lambda a^\dagger a - \alpha^2]$ which

stabilizes a two-dimensional manifold hosting the moon cat qubit in the memory mode a.

The corresponding jump operator $L_2$ can be expressed as follows:

$$L_2 = \sqrt{\kappa_2}(a^2 + \lambda a^\dagger a - \alpha^2)$$

where: - $\kappa_2$ is the two-photon dissipation rate expressed as: $\kappa_2 = \dfrac{4|g_2|^2}{\kappa_b}$, with $\kappa_b$ being the single-photon loss rate of the buffer mode b and $g_2$ the two-photon coupling rate in between the memory and the buffer,

- $\alpha$ is the complex number resulting from the buffer drive 15, with $\alpha^2 = -\dfrac{\epsilon_d}{g_2}$, and
- $\lambda$ is the moon cat parameter which phase and amplitude result from the amplitude of the longitudinal pump 13, with

$$\lambda = \frac{g_2}{g_l}.$$

At this stage of the calibration, the phase difference between the longitudinal pump 13 and the buffer drive 15 along with the amplitude of longitudinal pump 13 must be determined.

To this end, a set of one or more discrete value(s) of the amplitude of the longitudinal pump 13 is selected. For each of the discrete values, the amplitude of the longitudinal pump 13 is set to this discrete value, and then the relative phase of the longitudinal pump 13 and the buffer drive 15 is varied. In addition, as with the compensation graph, the number of photons in the memory is measured.

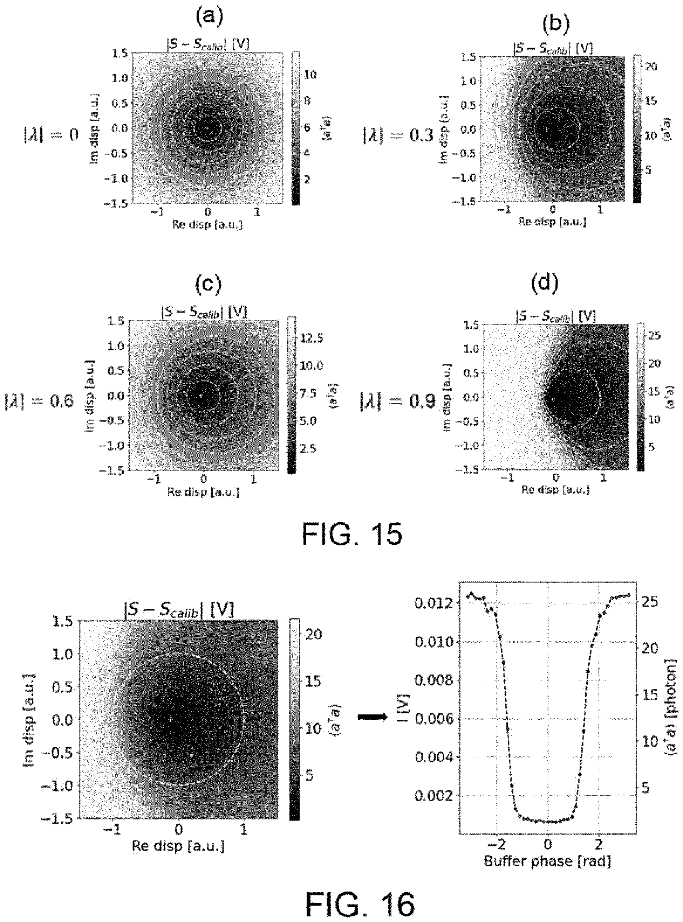

Figure 15 includes diagrams (a), (b), (c) and (d), each corresponding to a value of the amplitude of the longitudinal pump 13. Furthermore, each diagram is obtained by varying the phase of the buffer drive 15 - and therefore the phase difference between the longitudinal pump 13 and the buffer drive 15, since the phase of the longitudinal pump 15 remains constant - as well as the amplitude of the buffer drive 15.

More specifically, for each of diagrams (a), (b), (c) and (d), the x-axis corresponds to the real part of the buffer drive 15, while the y-axis corresponds to the imaginary part of the buffer drive 15. In other words, each diagram represents, for a given value of the amplitude of the longitudinal pump 15, the evolution of the number of photons in the memory as the buffer drive 15 scans the complex plane.

In the example of figure 15, the measurement method is the longitudinal readout.

The analysis of diagrams (a), (b), (c) and (d) leads to two observations. The first observation is that the amplitude of the longitudinal pump 13 influences the way in which the phase difference between the longitudinal pump 13 and the buffer drive 15 varies the number of photons in the memory. The second observation is that, despite the influence of the amplitude of the longitudinal pump 13, the longitudinal pump compensation always results in an absence of photons in the memory at the center of the diagram, i.e. for a zero buffer drive.

It is not necessary to vary the amplitude of the buffer drive 15, as it is possible to calibrate the quantum system 1 by keeping the amplitude of buffer drive 15 constant. In the complex plane, a constant amplitude and variable phase result in a displacement all around the circle whose radius corresponds to the amplitude of the buffer drive 15.

It is then possible to switch from a three-dimensional graph to a curve representing the evolution of the number of photons in the memory as a function of the phase of the buffer drive 15, and therefore of the phase difference between the longitudinal pump 13 and the buffer drive 15.

The transition from the three-dimensional graph to the curve by maintaining a constant value for the amplitude of the buffer drive 15, and therefore by varying only the phase of the buffer drive 15, is illustrated in figure 16. It should be noted that, in figure 16, the three-dimensional graph corresponds to diagram (b) of figure 15.

In figure 16, the circle corresponding to a constant amplitude for the buffer drive 15 is drawn with a dotted line.

The curve shows that the number of photons in the memory decreases when the phase of the buffer drive 15 is between $-\pi$ and 0, and increases between 0 and $\pi$. In particular, the memory contains a minimum number of photons when the phase of the buffer drive is zero.

As mentioned above, it should be noted that the amplitude of the longitudinal pump 13 affects the way the quantity $\langle a^\dagger a \rangle$ evolves as a function of the phase difference between the longitudinal pump 13 and the buffer drive 15. From this observation, it is possible to find the amplitude of the moon cat parameter $\lambda$ corresponding to the amplitude of the longitudinal pump 13. The fitting of the amplitude of the moon cat parameter $\lambda$ to the amplitude of the longitudinal pump 13 is based on the fact that the stabilized bosonic qubit is a moon cat qubit that Applicant knows how to characterize. Thus, as detailed in subsection B.2, the expansion on Fock basis of the even moon cat state $|C_\alpha^+\rangle_{MCS}$ and the odd moon cat state

$|C_\alpha^-\rangle_{MCS}$ is the following:

$$|C_\alpha^+\rangle_{MCS} = N^+ \sum_{m \geq 0} \mu_{2m}|2m\rangle$$

with:

$$\mu_{2m} = \frac{1}{\sqrt{2m!}} \prod_{q=0}^{m-1} (\alpha^2 - 2\lambda q) \; \forall \; m > 0$$

$$\mu_0 = 1$$

and:

$$|C_\alpha^-\rangle_{MCS} = N^- \sum_{m \geq 0} \mu_{2m+1}|2m + 1\rangle$$

with:

$$\mu_{2m+1} = \frac{1}{\sqrt{(2m + 1)!}} \prod_{q=0}^{m-1} (\alpha^2 - \lambda(2q + 1)) \; \forall \; m > 0$$

$$\mu_1 = 1$$

Figure 15 indicates the amplitude of the moon cat parameter $\lambda$ corresponding to each amplitude of the longitudinal pump 13. Diagram (a) corresponds to $|\lambda| = 0$, diagram (b) corresponds to $|\lambda| = 0.3$, diagram (c) corresponds to $|\lambda| = 0.6$ and diagram (d) corresponds to $|\lambda| = 0.9$.

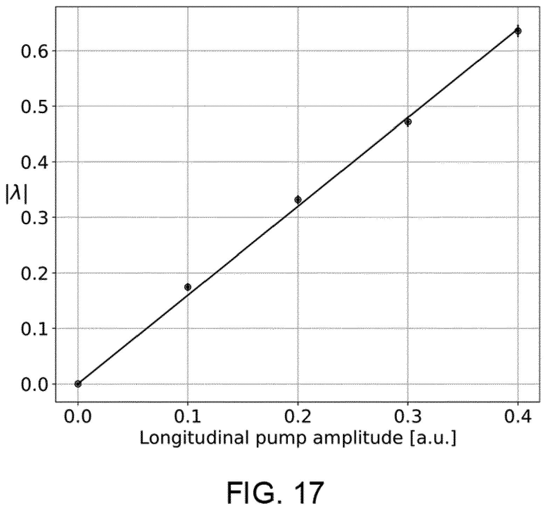

Figure 17 illustrates the fitting of the amplitude of the moon cat parameter $\lambda$ to the amplitude of the longitudinal pump 13. It appears that there is a linear relationship between the amplitude of the moon cat parameter $\lambda$ and the amplitude of the longitudinal pump 13. Such a linear relationship is expected from the formula of the longitudinal term:

$$g_l = 2E_J\varphi_{\Sigma,0}\varphi_a^2\varphi_b.$$

The straight line obtained necessarily passes through the point with coordinates (0;0) since there is no moon cat qubit in the absence of the longitudinal pump 13. Therefore, it is possible to obtain this straight line from a single amplitude value of the longitudinal pump 13 for which the amplitude of the moon cat parameter $\lambda$ has been determined by characterizing the moon cat qubit. Advantageously, the straight line is constructed from several points.

The linear relationship between the amplitude of the moon cat parameter $\lambda$ and the amplitude of the longitudinal pump 13 can be confirmed experimentally by performing a Wigner tomography for each value of the amplitude of the longitudinal pump 13. The amplitude of the moon cat parameter $\lambda$ can be calculated based on the Wigner tomography and the moon cat qubit characterization described above.

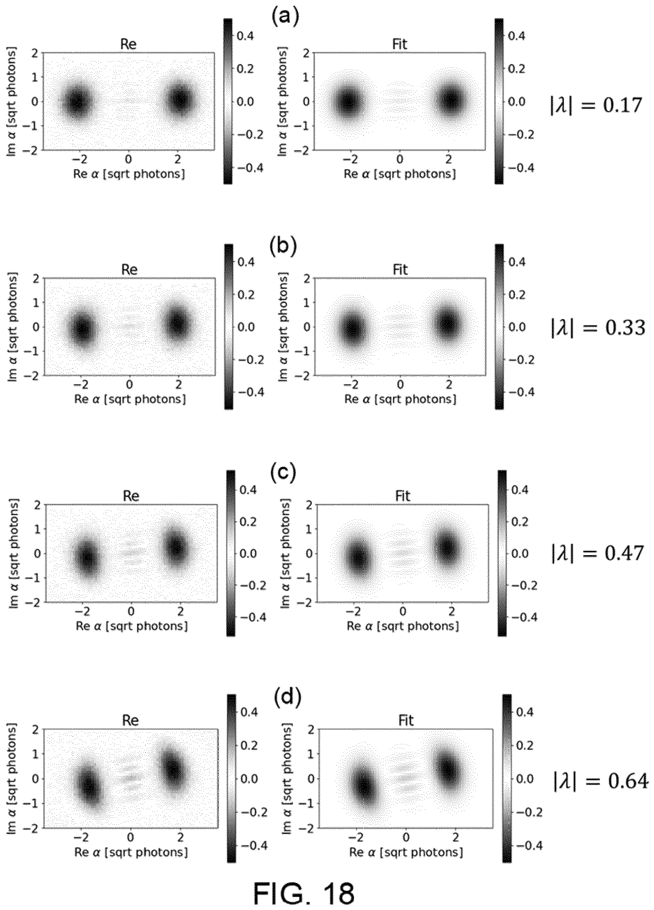

Figure 18 shows several Wigner tomographies. More particularly, figure 18 includes diagrams (a), (b), (c) and (d). In each diagram, the Wigner tomography on the left is the Wigner tomography performed experimentally for a given value of the amplitude of the longitudinal pump 13, while the Wigner tomography on the right is the theoretical Wigner tomography corresponding to the amplitude of the moon cat parameter $\lambda$ associated with the value of the amplitude of the longitudinal pump 13.

Figure 18 indicates the amplitude of the moon cat parameter $\lambda$ corresponding to the theoretical Wigner tomography of each diagram. Diagram (a) corresponds to $|\lambda| = 0.17$, diagram (b) corresponds to $|\lambda| = 0.33$, diagram

(c) corresponds to $|\lambda| = 0.47$ and diagram (d) corresponds to $|\lambda| = 0.64$.

Thanks to the curve in figure 17, it is possible to select the appropriate value for the amplitude of the longitudinal pump 13 in order to obtain a desired value for the amplitude of the moon cat parameter $\lambda$.

As detailed in subsection B.3, figure 7 shows that the moon cat qubit (solid lines) involves the same improvement in terms of bit-flip as the squeezed cat qubit (dotted lines) or even slightly better where the amplitude of the moon cat parameter $\lambda$ is less than or equal to 1. Advantageously, the value of the amplitude of the longitudinal pump 13 is selected so that the amplitude of the moon cat parameter $\lambda$ is substantially equal to 1: $|\lambda| = 1$.

Furthermore, once the amplitude of the longitudinal pump 13 has been set, the curve in figure 16 is used to select the relative phase of the longitudinal pump 13 and the buffer drive 15 that minimizes the quantity $\langle a^\dagger a \rangle$, and therefore that minimizes the number of photons in the memory.

Indeed, to inflate the size of the moon cat qubit, it is preferable to play on the amplitude of the buffer drive 15 rather than on its phase.

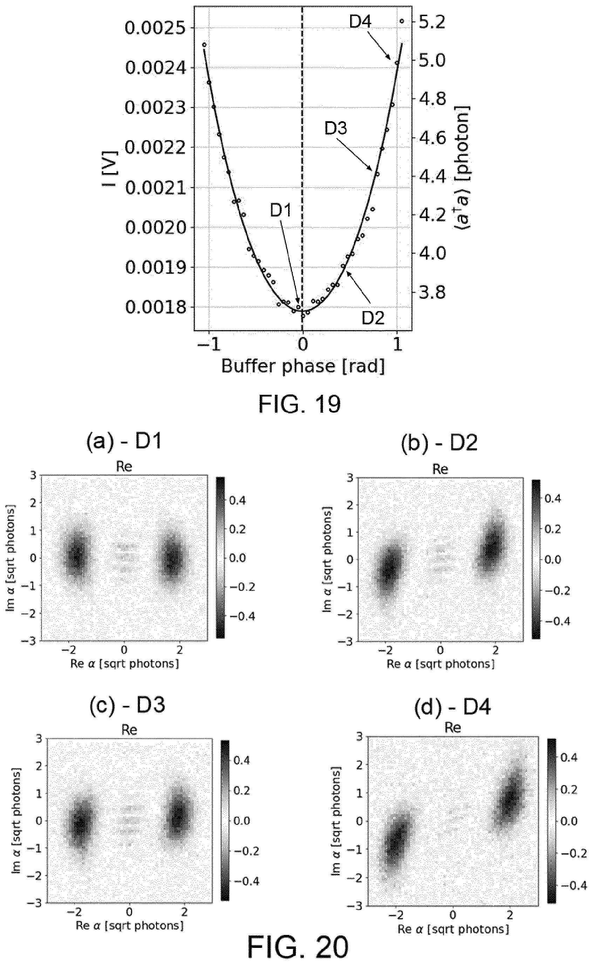

The reason for choosing a phase of the buffer drive 15 that minimizes the number of photons in the memory is illustrated in figures 19 and 20.

Figure 19 shows a zoom on the curve of figure 16, where four particular points D1, D2, D3 and D4, each corresponding to a different value of the phase of the buffer drive 15, are indicated.

Figure 20 includes several diagrams (a), (b), (c) and (d) each corresponding to an experimental Wigner tomography. Each Wigner tomography corresponds to a respective point indicated on figure 19, and therefore to a different value of the phase of the buffer drive 15. More specifically, diagram (a) corresponds to point D1, diagram (b) corresponds to point D2, diagram (c) corresponds to point D3 and diagram (d) corresponds to point D4.

### C.3 Synchronization of the different microwave sources of the quantum system

A further adjustment concerns the synchronization of the microwave sources in the command circuit 5 of the quantum system 1, i.e. the two-photon pump 11, the longitudinal pump 13 and the buffer drive 15.

The principle is to determine, for each of the microwave sources, the delay between a variation in the signal of the microwave source and the arrival of this variation in the non-linear superconducting quantum circuit 3. To this end, each microwave source is turned on and its signal is varied significantly, while the resulting signal is measured at the level of the non-linear superconducting quantum circuit 3. In this way, the delay of the two-photon pump 11, the longitudinal pump 13 and the buffer drive 15 can be determined.

These different delays are used to improve the calibration of the quantum system 1.

### C.4 Further calibrations

To improve the calibration of the quantum system 1, the relative phase of the two-photon pump 11 and the longitudinal pump 13 can be adjusted. Optimal noise bias can be achieved when the phase of the two-photon pump 11 is equal to the phase of the longitudinal pump 13, i.e. when the relative phase of the two-photon pump 11 and the longitudinal pump 13 is zero.

Ideally, the respective phases of the two-photon pump 11, the longitudinal pump 13 and the buffer drive 15 are equal. Considering that the two-photon coupling rate $g_2$ is real, the phase of the buffer drive 15 should be equal to $\pi$ in order to get the moon cat qubit on the real axis; then, the phase of the longitudinal pump 13 should be equal to 0.

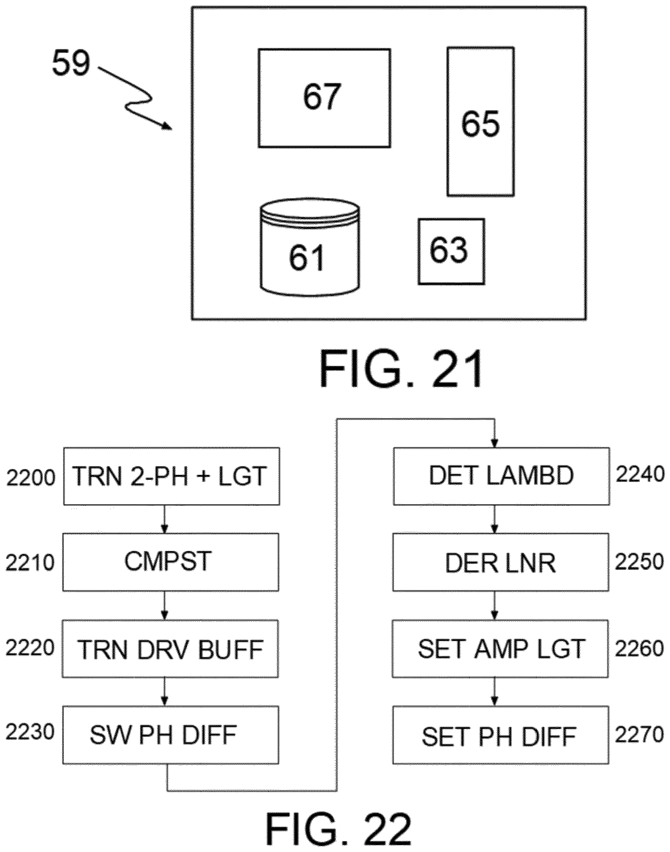

Figure 21 illustrates a device 59 arranged to calibrate the quantum system 1 for the purpose of stabilizing a moon cat qubit.

To this end, the device 59 comprises a memory 61, a processor 63, a controller 65 and a calculator 67.

The memory 61 is arranged to store instructions of a computer program whose execution, by the processor 63, results in the functioning of the device 59.

The memory 61 can also be arranged to store data relating to the quantum system 1, in particular the data generated during the calibration of the quantum system 1.

The memory 61 can be any data storage medium arranged to receive and store digital data, for instance a hard disk, a semiconductor disk or more generally any computer component dedicated to the storage of data on flash memory. The memory 61 can also be a random access memory (RAM) or a magneto-optical disk. A combination of several types of data storage can also be envisaged.

The memory 61 is a computer-readable storage medium, which may or may not be non-transitory.

The processor 63 can be a microprocessor, a programmable logic device (PLD) or a dedicated chip of field programmable gate array (FPGA) or system on chip (SoC) type, a grid of computer resources, a microcontroller or any other specific form that has the necessary computing power to implement the method of calibrating the quantum system 1. One or more of these elements can also be implemented in the form of specialized electronic circuits such as an application-specific integrated circuit (ASIC). A combination of processors and electronic circuits can also be envisaged.

The controller 65 is arranged to control the quantum system 1 for calibration purposes, either to acquire information relating to the quantum system 1 or to calibrate it.

The controller 65 is arranged to control the command circuit 5, and more particularly the two-photon pump 11, the longitudinal pump 13, the buffer drive 15 and, if applicable, the compensation pump 19.

In other words, the controller 65 is arranged to turn on/off each pump or drive of the command circuit 5 and to tune the amplitude, phase and frequency of each of them.

In addition, the controller 65 can be arranged, if applicable, to control the compensation module 47 for varying the amplitude difference and the phase difference between the common flux and the differential flux of the ATS 7.

Finally, the calculator 67 is arranged to analyze numerically the influence of the amplitude of the longitudinal pump 13 on the evolution of the number of photons in the memory as a function of the phase difference between the longitudinal pump 13 and the buffer drive 15.

The computer 67 is also arranged to determine a linear relationship between the amplitude of the longitudinal pump 13 and the amplitude of the moon cat qubit parameter $\lambda$.

Figure 22 illustrates the method of calibrating the quantum system 1 for the purpose of stabilizing a moon cat qubit.

In the following, this method is carried out using the device 59.

In an operation 2200, the controller 65 turns on the two-photon pump 11 at the frequency $|2f_a - f_b|$ and the longitudinal pump 13 at the frequency $f_b$.

As previously explained, the longitudinal pump 13 causes the first-order term $H_{ATS,1}$ to linearly drive the buffer mode b. Such an undesired buffer drive, combined with the non-linear conversion between two photons of the memory mode a and one photon of the buffer mode b and the longitudinal coupling between the memory mode a and the buffer mode b, results in the generation of a moon cat qubit hosted in the memory mode a.

In an operation 2210, the undesired buffer drive is compensated using the controller 65 and the calculator 67.

Such a compensation can be implemented using the compensation module 47 or the compensation pump 19.

The compensation module 47 is used to vary the amplitude difference between the common flux and the differential flux of the ATS 7 using the RF variable attenuator 51 and to vary the phase difference between the common flux and the differential flux of the ATS 7 using the RF phase shifter 53 while measuring the number of photons in the memory. The compensation graph obtained using the compensation module 47 is then exploited to identify a relevant zero, i.e. a point of the compensation graph at which the number of photons in the memory is zero due to the fact that the undesired buffer drive is compensated.

Alternatively, the additional compensation module 19 is used to drive the buffer mode b in order to compensate the undesired buffer drive.

In an operation 2220, the controller 65 turns on the buffer drive 15 at the frequency $f_b$.

Consequently, the non-linear superconducting quantum circuit 3 engineers a Hamiltonian H yielding through dissipation of the buffer mode b an effective dissipator $D[a^2 + \lambda a^\dagger a - \alpha^2]$ which stabilizes a two-dimensional manifold hosting the moon cat qubit in the memory mode a.

In an operation 2230, the controller 65 varies the phase difference between the longitudinal pump 13 and the buffer drive 15 while the number of photons in the memory is measured. To this end, the phase of the buffer drive 15 is varied and a longitudinal readout can be implemented since a longitudinal coupling between the memory mode a and the buffer mode b is already performed.

More particularly, such phase difference scanning is performed for one or more discrete values of the amplitude of the longitudinal pump 13.

In an operation 2240, the calculator 67 determines the respective value of the amplitude of the moon cat parameter $\lambda$ corresponding to each amplitude value of the longitudinal pump 13 on the basis of the evolution of the number of photons in the memory as a function of the phase difference for this amplitude value of the longitudinal pump 13.

In an operation 2250, the calculator 67 derives a linear relationship between the amplitude of the longitudinal pump 13 and the amplitude of the moon cat parameter $\lambda$. Such a linear relationship is illustrated in figure 17: the evolution of the amplitude of the moon cat parameter $\lambda$ as a function of the amplitude of the longitudinal pump 13 takes the form a straight line.

In an operation 2260, the controller 65 sets the amplitude of the longitudinal pump 13 at a value at which the amplitude of the moon cat parameter $\lambda$ is substantially equal to a desired value based on the linear relationship derived in operation 2250.

Finally, in an operation 2270, the controller 65 sets the phase difference between the longitudinal pump 13 and the buffer drive 15 at a value at which the number of photons in the memory is minimal.

**Claims**

1. A method of calibrating a quantum system (1), said quantum system (1) being arranged for stabilizing a bosonic qubit and comprising:

   - a command circuit (5) including a first microwave source (11), a second microwave source (13) and a third microwave source (15) each arranged for delivering microwave radiation, and
   - a non-linear superconducting quantum circuit (3) including an asymmetrically threaded superconducting quantum interference device (7) and at least one resonant portion (9) to which said asymmetrically threaded superconducting quantum interference device (7) is connected, said asymmetrically threaded superconducting quantum interference device (7) having flux lines through which radiation can be delivered to modulate a common flux and a differential flux, said non-linear superconducting quantum circuit (3) having a first mode (a) with a first resonant frequency and a second mode (b) with a second resonant frequency, said second resonant frequency being different from twice the first resonant frequency, said second mode (b) being dissipative,
   the asymmetrically threaded superconducting quantum interference device (7) being arranged such that, when

   • the first microwave source (11) delivers radiation through said flux lines to modulate the common flux at a frequency equal to the absolute value of the difference between twice the first resonant frequency and the second resonant frequency,
   • the second microwave source (13) delivers radiation through said flux lines to modulate the common flux at a frequency equal to the second resonant frequency, and
   • the third microwave source (15) delivers radiation at a frequency equal to the second resonant frequency to the a least one resonant portion (9) to drive the second mode (b),

   the non-linear superconducting quantum circuit (3) engineers a Hamiltonian H expressed as

   $$H/_\hbar = g_2(a^2 + \lambda a^\dagger a - \alpha^2)b^\dagger + \text{h. c.}$$

   , where $g_2$ is proportional to the amplitude of the first microwave source (11), $a$ is the annihilation operator of the first mode (a), $\lambda$ is a complex number which phase and amplitude result from the amplitude of the second microwave source (13) and are each defined relative to the phase and amplitude of the first microwave source (11) respectively, $\alpha$ is a complex number resulting from the third microwave source (15) and defined relative to the first microwave source (11), b is the annihilation operator of the second mode (b), and h. c. is the Hermitian conjugate, said Hamiltonian H yielding through dissipation of the second mode (b) an effective dissipator $D[a^2 + \lambda a^\dagger a - \alpha^2]$ which stabilizes a two-dimensional manifold hosting the bosonic qubit in the first mode (a),
   said method comprising the following operations:

   a) turning on (2200) the first microwave source (11) at a frequency equal to the absolute value of the difference between twice the first resonant frequency and the second resonant frequency along with the second microwave source (13) at a frequency equal to the second resonant frequency,
   b) compensating (2210) an undesired drive of the second mode (b) caused by the second microwave source (13),
   c) turning on (2220) the third microwave source (15) at a frequency equal to the second resonant frequency,
   d) for one or more amplitude values of the second microwave source (13), varying (2230) the phase difference between the second microwave source (13) and the third microwave source (15) while measuring a quantity $\langle a^\dagger a \rangle$,
   e) determining (2240) the respective value of the amplitude of the complex number $\lambda$ corresponding to each amplitude value of the second microwave source (13) on the basis of the evolution of the quantity $\langle a^\dagger a \rangle$ as a function of said phase difference for said amplitude value of the second microwave source (13), and deriving (2250) a linear relationship between the amplitude of the second microwave source (13) and the amplitude of the complex number $\lambda$, and
   f) setting (2260) the amplitude of the second microwave source (13) at a value at which the amplitude of the complex number $\lambda$ is substantially equal to a desired value based on said linear relationship, and setting (2270) said phase difference at a value at which the quantity $\langle a^\dagger a \rangle$ is minimal.

2. The method of claim 1, the flux lines of the asymmetrically threaded superconducting quantum interference device (7) including at least left and right flux lines, the quantum system (1) further comprising a compensation module (47) arranged to couple the second microwave source (13) to said left and right flux lines, said compensation module (47) including an RF power divider (49) arranged to divide the output of the second microwave source (13) into a first and a second power lines respectively connected to the left and right flux lines, an RF variable attenuator (51) arranged on the first power line to vary the amplitude difference between the common flux and the differential flux, and an RF phase shifter (53) arranged on the second power line to vary the phase difference between the common flux and the differential flux, wherein operation b) includes:

b1) varying the amplitude difference between the common flux and the differential flux with the RF variable attenuator (51) and the phase difference between the common flux and the differential flux with the RF phase shifter (53) while measuring the quantity $\langle a^\dagger a \rangle$,

b2) identifying a pair of respective values of said amplitude difference and said phase difference for which the quantity $\langle a^\dagger a \rangle$ is zero due to compensation of the undesired drive of the second mode (b), and

b3) setting said amplitude difference and said phase difference at said pair of respective values.

3. The method of claim 1, the quantum system (1) further comprising an additional microwave source (19) arranged to deliver radiation through said flux lines to modulate the differential flux at a frequency equal to the second resonant frequency, wherein operation b) includes:

b4) turning on said additional microwave source (19) at a frequency equal to the second resonant frequency, and

b5) tuning the amplitude and phase of said additional microwave source (19) to compensate for the undesired drive of the second mode (b).

4. The method of one of the preceding claims, wherein operation d) includes varying the phase of the third microwave source (15) while keeping the phase of the second microwave source (13) constant.

5. The method of one of the preceding claims, wherein operation d) includes measuring the quantity $\langle a^\dagger a \rangle$ by performing a longitudinal readout with the second microwave source (13).

6. The method of one of the preceding claims, further comprising the following operation:
g) setting the phase difference between the first microwave source (11) and the second microwave source (13) to zero.

7. The method of claim 6, wherein operation g) includes setting the respective phases of the first microwave source (11), the second microwave source (13) and the third microwave source (15) equal to each other.

8. The method of one of the preceding claims, wherein operation f) includes setting the amplitude of the second microwave source (13) at a value at which the amplitude of the complex number $\lambda$ is less than or equal to 1.

9. The method of one of the preceding claims, wherein operation f) includes setting the amplitude of the second microwave source (13) at a value at which the amplitude of the complex number $\lambda$ is substantially equal to 1.

10. A computer program comprising instructions whose execution, by at least one processor (63), results in the implementation of the method of one of the preceding claims.

11. A computer-readable storage medium (61) comprising the computer program of claim 10 stored thereon.

12. A device (59) for calibrating a quantum system (1), said quantum system (1) being arranged for stabilizing a bosonic qubit and comprising:

- a command circuit (5) including a first microwave source (11), a second microwave source (13) and a third microwave source (15) each arranged for delivering microwave radiation, and

- a non-linear superconducting quantum circuit (3) including an asymmetrically threaded superconducting quantum interference device (7) and at least one resonant portion (9) to which said asymmetrically threaded superconducting quantum interference device (7) is connected, said asymmetrically threaded superconducting quantum interference device (7) having flux lines through which radiation can be delivered to modulate a common flux and a differential flux, said non-linear superconducting quantum circuit (3) having a first mode (a) with a first resonant frequency and a second mode (b) with a second resonant frequency, said second resonant frequency being different from twice the first resonant frequency, said second mode (b) being dissipative, the asymmetrically threaded superconducting quantum interference device (7) being arranged such that, when

• the first microwave source (11) delivers radiation through said flux lines to modulate the common flux at a frequency equal to the absolute value of the difference between twice the first resonant frequency and the second resonant frequency,

• the second microwave source (13) delivers radiation through said flux lines to modulate the common flux at a frequency equal to the second resonant frequency, and

• the third microwave source (15) delivers radiation at a frequency equal to the second resonant frequency to the a least one resonant portion (9) to drive the second mode (b),

the non-linear superconducting quantum circuit (3) engineers a Hamiltonian H expressed as

$$H/\hbar = g_2(a^2 + \lambda a^\dagger a - \alpha^2)b^\dagger + \text{h.c.}$$

, where $g_2$ is proportional to the amplitude of the first microwave source (11), $a$ is the annihilation operator of the first mode (a), $\lambda$ is a complex number which phase and amplitude result from the amplitude of the second microwave source (13) and are each defined relative to the phase and amplitude of the first microwave source (11) respectively, $\alpha$ is a complex number resulting from the third microwave source (15) and defined relative to the first microwave source (11), b is the annihilation operator of the second mode (b), and h. c. is the Hermitian conjugate, said Hamiltonian H yielding through dissipation of the second mode (b) an effective dissipator $D[a^2 + \lambda a^\dagger a - \alpha^2]$ which stabilizes a two-dimensional manifold hosting the bosonic qubit in the first mode (a), said device (59) being arranged to:

- turn on the first microwave source (11) at a frequency equal to the absolute value of the difference between twice the first resonant frequency and the second resonant frequency along with the second microwave source (13) at a frequency equal to the second resonant frequency,
- compensate an undesired drive of the second mode (b) caused by the second microwave source (13),
- turn on the third microwave source at a frequency equal to the second resonant frequency,
- for one or more amplitude values of the second microwave source (13), vary the phase difference between the second microwave source (13) and the third microwave source (15) while measuring a quantity $\langle a^\dagger a \rangle$,
- determine the respective value of the amplitude of the complex number $\lambda$ corresponding to each amplitude value of the second microwave source (13) on the basis of the evolution of the quantity $\langle a^\dagger a \rangle$ as a function of said phase difference for said amplitude value of the second microwave source (13), and derive a linear relationship between the amplitude of the second microwave source (13) and the amplitude of the complex number $\lambda$, and
- set the amplitude of the second microwave source (13) at a value at which the amplitude of the complex number $\lambda$ is substantially equal to a desired value based on said linear relationship, and set said phase difference at a value at which the quantity $\langle a^\dagger a \rangle$ is minimal.

EP 4 614 400 A1

FIG. 1

FIG. 2

FIG. 3

FIG. 4

3

31 7 29

33

37

45 43 35 41 39

FIG. 5

25 17

env. $f_b$ b a

$\phi_b$ $\phi_a$

$f_a$ $0\odot$ $\odot\pi$

23 27 7

FIG. 6

FIG. 7

FIG. 8

FIG. 9

FIG. 10

7

$\varphi_L$ $\varphi_R$

37

33 35

$\odot$ 0 $\pi$ $\odot$

$i_L$ $i_R$

# FIG. 11

47

att_prog

11 1

−3dB S

1 2

−3dB 2 55

13 S 1 51

−3dB U6

2 Phase_shifter

49 $\ominus$ 1

53 −3dB S

11 2

57

Pump left

Pump right

# FIG. 12

$Z_{nebula}$

$Arg(S - S_{calib})$ [rad]

$Z_{stark,1}$

$Z_{stark,2}$

FIG. 13

$Z_{nebula}$

(a)

$|S - S_{calib}|$ [V]

$P_2$

$P_1$

$Z_{nebula}$

(b)

$Arg(S - S_{calib})$ [rad]

$P_2$

$P_1$

FIG. 14

FIG. 15

FIG. 16

FIG. 17

FIG. 18

FIG. 19

(a) - D1

(b) - D2

(c) - D3

(d) - D4

FIG. 20

# FIG. 21

| | | |
|---|---|---|
| 2200 | TRN 2-PH + LGT | |
| 2210 | CMPST | |
| 2220 | TRN DRV BUFF | |
| 2230 | SW PH DIFF | |

| | | |
|---|---|---|
| DET LAMBD | 2240 |
| DER LNR | 2250 |
| SET AMP LGT | 2260 |
| SET PH DIFF | 2270 |

# FIG. 22

Europäisches
Patentamt

European
Patent Office

Office européen
des brevets

# EUROPEAN SEARCH REPORT

**Application Number**

EP 24 30 5338

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2022/156621 A1 (ARRANGOIZ ARRIOLA PATRICIO [US] ET AL) 19 May 2022 (2022-05-19) * paragraph [0058] - paragraph [0108] * * figures 1a-6 * | 1-12 | INV. G06N10/20 G06N10/40 G06N10/70 |

TECHNICAL FIELDS
SEARCHED        (IPC)

G06N

The present search report has been drawn up for all claims

| Place of search | Date of completion of the search | Examiner |
|---|---|---|
| The Hague | 22 October 2024 | Baldan, Marco |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 30 5338

This annex lists the patent family members relating to the patent documents cited in the above-mentioned European search report.
The members are as contained in the European Patent Office EDP file on
The European Patent Office is in no way liable for these particulars which are merely given for the purpose of information.

22-10-2024

| Patent document cited in search report | Publication date | Patent family member(s) | Publication date |
|---|---|---|---|
| US 2022156621 A1 | 19-05-2022 | NONE | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 23306839

- EP 21306965

**Non-patent literature cited in the description**

- **Q. XU et al.** Autonomous quantum error correction and fault-tolerant quantum computation with squeezed cat qubits. *arXiv:2210.13406*, 2022
- **T. HILLMANN et al.** Quantum error correction with dissipatively stabilized squeezed cat qubits. *arXiv:2210.13359, Phys. Rev. A*, 2022, vol. 107, 032423
- **R. LESCANNE et al.** Exponential suppression of bit-flips in a qubit encoded in an oscillator. *Nature Physics*, 2020
- **E. GOUZIEN et al.** Computing 256-bit Elliptic Curve Logarithm in 9 Hours with 126133 Cat Qubits. *arXiv:2502.06639*, 2023
- **Z. LEGHTAS et al.** Confining the state of light to a quantum manifold by engineered two-photon loss. *Science*, 2015, vol. 347 (6224)
- **S. TOUZARD et al.** Coherent Oscillations inside a Quantum Manifold Stabilized by Dissipation. *Physical Review X*, 2018, vol. 8, 023005